# FASCICULE DE BREVET EUROPEEN

(11) **EP 3 259 970 B1**
(45) Date de publication et mention de la délivrance du brevet: **25.03.2020**
(21) Numéro de dépôt: 17177393.0
(22) Date de dépôt: 22.06.2017
(51) Int. Cl.: A01B 59/06, A01B 69/00, A01B 63/02

(54) **DISPOSITIF PORTE-OUTIL AGRICOLE FACILITANT LA PRISE DE RANG, PROCESSUS D'INSTALLATION ET SYSTÈME AGRICOLE ASSOCIÉS**
LANDWIRTSCHAFTLICHE WERKZEUGHALTERUNGSVORRICHTUNG, DIE DIE EINHALTUNG DER REIHEN ERLEICHTERT, ENTSPRECHENDES MONTAGEVERFAHREN UND ENTSPRECHENDES LANDWIRTSCHAFTLICHES SYSTEM
AGRICULTURAL TOOL-HOLDER DEVICE FOR FACILITATING FURROW SELECTION, ASSOCIATED INSTALLATION PROCESS AND AGRICULTURAL SYSTEM

(30) Priorité: 23.06.2016 FR 1655884
(43) Date de publication de la demande: 27.12.2017
(73) Titulaire: Solemat, 69210 Sourcieux-les-Mines (FR)
(72) Inventeur: CORBIN, Guillaume, 69210 SOURCIEUX-LES-MINES (FR)
(74) Mandataire: Weber, Jean-François

(56) Documents cités:
- EP-A2- 2 283 719
- WO-A1-87/07112
- FR-A- 1 247 117
- NL-C2- 1 020 444

## Description

La présente invention concerne le domaine général de l'outillage agricole et en particulier des porte-outils destinés à être interposés entre un tracteur et un outil agricole, par exemple pour faciliter la prise de rang.

Plus particulièrement, l'invention concerne un dispositif porte-outil destiné à être interposé entre un tracteur et un outil agricole, ledit dispositif permettant le contrôle du positionnement dudit outil relativement à un rang de plantations indépendamment de la position du tracteur relativement audit rang, ledit dispositif comprenant un châssis fixe destiné à être attaché au tracteur, et un châssis monté mobile relativement audit châssis fixe et destiné à être attaché audit outil.

L'invention concerne également un procédé d'installation d'un outil sur un tracteur équipé d'un dispositif porte-outil permettant le contrôle du positionnement dudit outil relativement à un rang de plantations indépendamment de la position du tracteur relativement audit rang, ledit dispositif comprenant un châssis fixe et un châssis monté mobile relativement audit châssis fixe, le procédé comprenant les étapes suivantes :
- on attache audit tracteur ledit châssis fixe,
- on attache audit tracteur ledit outil agricole.

L'invention concerne également un système agricole destiné à effectuer des travaux agricoles le long d'au moins un rang de plantations comprenant :
- un tracteur,
- un outil agricole tel qu'un cultivateur viticole ou un déchaumeur,
- un dispositif interposé entre ledit tracteur et ledit outil agricole, ledit dispositif permettant le contrôle du positionnement dudit outil relativement au rang de plantations indépendamment de la position du tracteur relativement audit rang, ledit dispositif comprenant un châssis fixe attaché au tracteur, et un châssis monté mobile relativement audit châssis fixe et attaché audit outil.

Dans les domaines de la viticulture et / ou de l'arboriculture, il est connu de répartir les plantations selon des rangées longitudinales parallèles entre elles. Afin de faciliter le travail du viticulteur et / ou de l'arboriculteur, il est également bien connu d'utiliser du matériel spécifique dédié au travail de la vigne ou des arbres (arbres fruitiers notamment), et tout particulièrement des outils spécifiques conçus pour être montés sur un tracteur adapté (par exemple un tracteur de petites dimensions afin de pouvoir circuler entre les rangs de vigne ou d'arbres fruitiers) qui se déplace le long d'un rang de plantations ou entre deux rangs de plantations. Le vigneron ou l'arboriculteur dispose ainsi d'un choix d'outils spécifiques, destinés à être attachés à son tracteur, qu'il s'agisse d'outils « passifs » ou « *actifs* ». Les outils « passifs » (butoir, cultivateur, déchaumeur, etc.) sont uniquement mis en mouvement par le déplacement (et la vitesse) du tracteur et restent immobiles relativement à ce dernier.

Les outils « actifs » spécifiquement adaptés au travail de la vigne ou des arbres sont quant à eux habituellement munis d'une prise d'alimentation en énergie (généralement mécanique ou hydraulique) pour mettre en mouvement l'outil ou l'un de ses éléments (par exemple en rotation) relativement au tracteur afin de lui conférer ainsi un caractère « actif ». Il peut s'agir par exemple d'une tondeuse, d'une ébourgeonneuse, de brosses, de broyeurs, ou encore de différents outils inter-ceps. Ces outils « actifs » sont donc destinés à être doublement connectés au tracteur, pour d'une part être déplacés par le tracteur le long du ou des rang(s) de plantations, et d'autre part recevoir du tracteur l'énergie nécessaire à leur fonctionnement, par exemple par l'intermédiaire d'un cardan reliant la prise de force du tracteur à la prise d'alimentation de l'outil concerné ou encore par l'intermédiaire de tuyaux hydrauliques connectant la centrale hydraulique du tracteur à la prise d'alimentation de l'outil concerné.

Ces outils connus largement éprouvés, donnent globalement satisfaction à leurs utilisateurs et peuvent être généralement installés aisément sur tous les modèles connus de tracteur de viticulture ou d'arboriculture, du fait de leur caractère standard.

Toutefois, pour arriver à un résultat satisfaisant, la conduite du tracteur demande quoiqu'il en soit une habileté extrême afin de positionner le plus précisément possible l'outil par rapport au(x) rang(s) de plantations. En effet, la personne qui conduit le tracteur doit veiller à ce que l'outil monté sur son tracteur n'entre pas en collision avec le ou les rang(s) de plantations le long duquel (desquels) le tracteur circule. Mais il doit également veiller à maintenir l'outil suffisamment près du ou des rang(s) de plantations afin d'effectuer un travail de la terre ou des ceps (ou des pieds) efficace. Il en résulte donc une difficulté de conduite accrue, d'autant plus que les rangs de plantations ne sont généralement pas parfaitement rectilignes, demandant alors au conducteur de constants ajustements de trajectoires qui sont difficiles et pénibles.

Le conducteur du tracteur doit donc fournir des efforts importants, notamment en termes de concentration mais aussi d'un point de vue physique, en raison notamment de la nécessité de se retourner fréquemment pour contrôler le positionnement de l'outil généralement attaché à l'arrière de son tracteur. Il en résulte également une baisse d'efficacité notable dans la mesure où la vitesse de circulation du tracteur est nécessairement réduite compte tenu desdits ajustements de trajectoires auxquels le conducteur doit en permanence procéder.

Le document EP-2283719 décrit un ensemble permettant d'installer de manière ajustable dans la direction latérale un appareil de travail agricole sur un véhicule.

Les objets assignés à la présente invention visent en conséquence à remédier aux différents inconvénients énumérés précédemment et à proposer un nouveau dispositif porte-outil destiné à être interposé entre un tracteur et un outil agricole, qui tout en étant universellement compatible avec le matériel standard existant, sans nécessiter la moindre modification de ce dernier, permet d'optimiser le positionnement de l'outil relativement au(x) rang(s) de plantations soumis à l'intervention de l'outil.

Un autre objet de l'invention vise à proposer un nouveau dispositif porte-outil qui permette de corriger les erreurs de trajectoire du conducteur du tracteur.

Un autre objet de l'invention vise à proposer un nouveau dispositif porte-outil qui soit particulièrement compact afin de pouvoir circuler entre deux rangs de plantations.

Un autre objet de l'invention vise à proposer un nouveau dispositif porte-outil qui soit particulièrement adapté à recevoir des outils de travail inter-ceps.

Un autre objet de l'invention vise à proposer un nouveau dispositif porte-outil qui soit particulièrement robuste, fiable tout en étant précis.

Un autre objet de l'invention vise à proposer un nouveau dispositif porte-outil qui soit particulièrement simple à utiliser et sûr.

Un autre objet de l'invention vise à proposer un nouveau dispositif porte-outil qui puisse indifféremment être monté à l'avant ou à l'arrière du tracteur.

Un autre objet de l'invention vise à proposer un nouveau dispositif porte-outil qui permette de faciliter et de sécuriser considérablement la conduite du tracteur, y compris lors des manœuvres.

Un autre objet de l'invention vise également à proposer un nouveau procédé d'installation d'un outil sur un tracteur équipé d'un dispositif porte-outil qui soit universellement compatible avec le matériel standard existant, sans nécessiter la moindre modification de ce dernier,

Un autre objet de l'invention vise également à proposer un nouveau procédé d'installation d'un outil sur un tracteur équipé d'un dispositif porte-outil qui soit particulièrement simple, rapide et sûr à mettre en œuvre.

Un autre objet de l'invention vise également à proposer un nouveau système agricole destiné à effectuer des travaux agricoles le long d'au moins un rang de plantations qui soit particulièrement simple et sûr à conduire et à manœuvrer.

Un autre objet de l'invention vise également à proposer un nouveau système agricole qui soit particulièrement compact afin de pouvoir circuler entre deux rangs de plantations.

Un autre objet de l'invention vise à proposer un nouveau système agricole qui soit particulièrement robuste et fiable.

Les objets assignés à l'invention sont atteints à l'aide d'un dispositif porte-outil selon la revendication 1.

Les objets assignés à l'invention sont également atteints à l'aide d'un procédé selon la revendication 12.

Les objets assignés à l'invention sont également atteints à l'aide d'un système agricole selon la revendication 13.

D'autres particularités et avantages de l'invention apparaîtront et ressortiront plus en détails à la lecture de la description faite ci-après, en référence aux dessins annexés, donnés uniquement à titre d'exemple illustratif et non limitatif, dans lesquels :
- La figure 1 illustre, selon une vue en perspective depuis le côté destiné à s'attacher à l'outil, un porte-outil selon l'invention, ledit porte-outil étant dans une configuration neutre (ou centrée).
- La figure 2 illustre, selon la même vue qu'à la figure 1, le porte-outil de la figure 1 dans une configuration extrême où son châssis mobile est totalement décalé à droite (selon le sens de déplacement du tracteur, dans l'hypothèse où ledit porte-outil est attaché à l'arrière du tracteur).
- La figure 3 illustre, selon la même vue qu'aux figures 1 et 2, le porte-outil des figures 1 et 2 dans une autre configuration extrême où son châssis mobile est cette fois totalement décalé à gauche (selon le sens de déplacement du tracteur, dans l'hypothèse où ledit porte-outil est attaché à l'arrière du tracteur).
- La figure 4 illustre, selon une vue en perspective depuis le côté destiné à s'attacher au tracteur, le porte-outil des figures précédentes dans la configuration de la figure 2 (décalé à droite).
- La figure 5 illustre, selon une vue de face, le porte outil de la figure 4 dans la configuration de la figure 4 (décalé à droite).
- La figure 6 est une vue de côté du porte-outil de la figure 5.
- La figure 7 est une vue de dessous du porte-outil de la figure 5.
- La figure 8 est une représentation schématique simplifiée de l'encombrement et de la fenêtre formée par le cadre du châssis fixe du porte-outil des figures 1 à 7.
- La figure 9 est une représentation schématique simplifiée de l'encombrement et de la fenêtre formée par le cadre du châssis mobile du porte-outil des figures 1 à 7, ledit châssis mobile étant représentée dans ses deux positions extrêmes : une position extrême à droite (celle de la figure 5) représentée en trait plein et une position extrême à gauche (en pointillé).
- La figure 10 est la superposition des figures 8 et 9, illustrant ainsi de manière schématique et simplifié les différentes positions du porte-outil des figures 1 à 7 et la fenêtre centrale ainsi formée.
- Les figures 11 et 12 sont des vues de détail des moyens de détections du porte-outil visibles sur la figure 1 selon une orientation sensiblement similaire.

L'invention concerne en tant que tel un dispositif porte-outil, c'est-à-dire un dispositif conçu pour supporter, porter ou soutenir un outil viticole (outil inter-ceps par exemple) ou arboricole. Ledit dispositif est destiné à être interposé entre un tracteur et ledit outil agricole, constituant ainsi une interface entre ledit tracteur et ledit outil. En d'autres termes, au lieu d'être porté directement par le tracteur, ledit outil est porté par le tracteur par l'intermédiaire du dispositif porte-outil de l'invention, ce dernier étant lui-même embarqué sur (ou porté par) le tracteur. Préférentiellement le terme tracteur désigne un véhicule motorisé destiné à tracter différents éléments, comme ceux que l'on rencontre communément dans le domaine agricole, mais peut également, sans sortir du cadre de l'invention désigner n'importe quel engin (motorisé ou non) dont la fonction principale est de tracter un élément, et particulièrement de tracter un outil agricole. Ainsi, sans sortir du cadre de l'invention, le terme tracteur peut également désigner un attelage animal (par exemple composé d'un ou plusieurs chevaux) destiné à travailler dans les vignes par exemple.

Préférentiellement, ledit porte-outil peut aussi bien être embarqué à l'avant du tracteur ou à l'arrière de ce dernier, par l'intermédiaire de dispositifs d'attache (et notamment des attelages) connus qui équipent généralement tous les tracteurs, comme cela sera détaillé par la suite.

Ledit outil est adapté à un usage en viticulture et / ou en arboriculture, c'est-à-dire au travail de plantations qui se présentent sous la forme de rangées longitudinales parallèles entre elles, et qui comportent des plantations solides verticales, comme par exemple des vignes ou des arbres fruitiers. De manière illustrative et non limitative, ledit outil désigne par exemple un outil « *passif* » tel qu'un butoir, un cultivateur, un déchaumeur, etc. ou un outil « *actif* » tel qu'une une tondeuse, une ébourgeonneuse, des brosses, des broyeurs, ou encore différents outils inter-ceps. Toutefois, et sans sortir du cadre de l'invention, ledit outil peut également être un outil utilisé dans l'agriculture classique, comme par exemple une charrue, un pulvérisateur, un semoir, etc.

Selon l'invention, ledit dispositif permet le contrôle du positionnement dudit outil relativement à un rang de plantations. En d'autres termes, ledit dispositif porte-outil de l'invention va permettre de positionner l'outil qu'il porte par rapport à un rang de plantations, ou par rapport à deux rangs de plantations parallèles entre eux, tels que les rangs formés par des vignes ou des arbres fruitiers, et ce indépendamment de la position du tracteur relativement audit rang. Le porte-outil est donc capable de positionner l'outil qu'il porte par rapport à un rang de plantation, avantageusement afin de positionner automatiquement ledit outil au plus près dudit rang, sans cependant détériorer les plantations de ce dernier, et ce pratiquement quelle que soit la position et la trajectoire du tracteur circulant à proximité dudit rang ou entre lesdits rangs de plantations.

Avantageusement, le contrôle du positionnement dudit outil par ledit porte-outil est un contrôle automatique qui s'effectue en temps réel, préférentiellement pour corriger les défauts de trajectoire du tracteur par rapport au(x) rang(s) de plantations. Ainsi, grâce au porte-outil de l'invention, l'opération de prise de rang est remarquablement facilitée dans la mesure où les petites erreurs de trajectoire du tracteur sont corrigées (le tracteur n'a pas besoin de suivre très précisément la trajectoire formée par le (ou les) rang(s) de plantations qu'il longe. Le travail du conducteur du tracteur est donc facilité, et la vitesse d'avancement de ce dernier peut être augmentée dans la mesure où les besoins de précision de trajectoire sont moindres.

Selon l'invention, et comme on peut le voir sur les différentes figures, ledit dispositif comprenant un châssis fixe 1 destiné à être attaché au tracteur. Par châssis fixe, on entend préférentiellement un ensemble de pièces et / ou d'organes attachés de manière fixe entres elles ou entre eux, ledit ensemble étant lui-même fixe dans le référentiel du tracteur, c'est-à-dire fixe par rapport au tracteur. En d'autres termes, les mouvements du tracteur sont répercutés sur ledit châssis fixe 1.

Selon le mode de réalisation préférentiel de l'invention illustré par les différentes figures, ledit dispositif porte-outil est attaché au tracteur par un attelage standard et bien connu en tant que tel comme par exemple un attelage ISO trois points de catégorie 1 et 2, largement utilisé et reconnu pour sa robustesse, sa fiabilité et sa sûreté. Un tel attelage comprend généralement une partie mâle, qui fait généralement saillie du tracteur, et une partie complémentaire femelle qui appartient généralement à l'outil que l'on souhaite atteler, c'est-à-dire attacher, au tracteur. Plus précisément, chacune desdites parties mâle et femelle se présente sous la forme de trois points d'attaches distincts positionnés en triangle, définissant ainsi deux points d'attaches inférieurs (généralement parallèles à l'axe des roues du tracteurs) et un point d'attache supérieure (ou troisième point) situé à équidistance desdits points d'attaches inférieurs. Avantageusement, ledit châssis fixe 1 est équipé de ladite partie femelle complémentaire de ladite partie mâle dudit attelage qui fait saillie dudit tracteur, de manière à pouvoir assembler ledit châssis fixe 1 sur le tracteur de manière aisée, sûre et pratique.

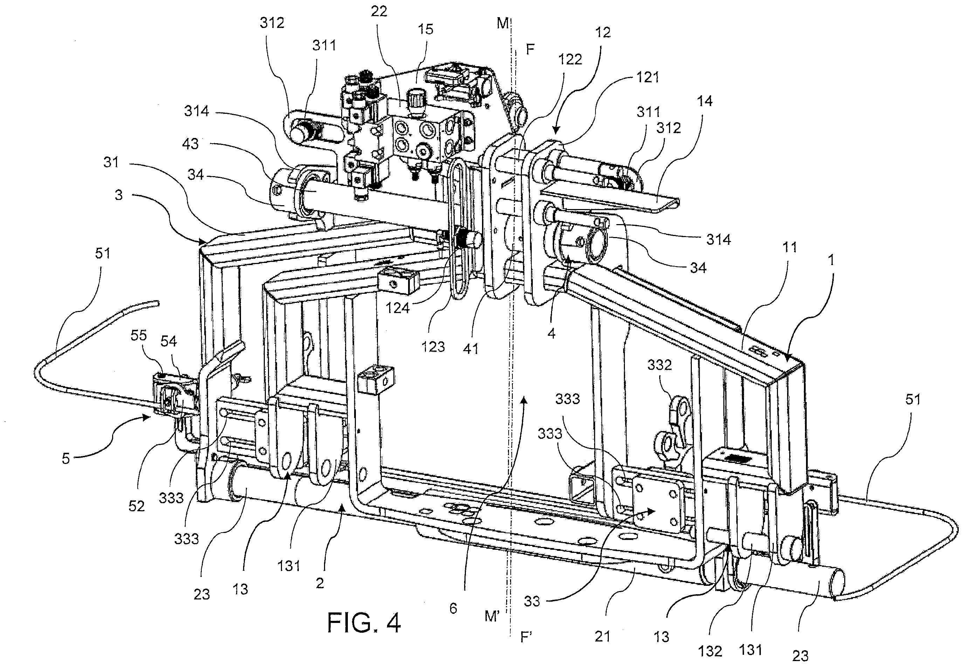

Préférentiellement, et comme on peut particulièrement le voir sur la figure 4, ledit châssis fixe 1 comprend un moyen d'attelage supérieur fixe 12, constituant avantageusement ledit troisième point d'attache femelle dudit attelage ISO 3 point. De manière préférentielle, ledit moyen d'attelage supérieur fixe 12 comprend une chape supérieure fixe 121 avantageusement constituée par deux plaques de métal parallèles entres elles et verticales, comme l'illustre la figure 4. Selon ce mode de réalisation préférentiel, ledit moyen d'attelage supérieur fixe 12 comprend également un axe supérieur 122 destiné à correspondre avec deux trous opposés réalisés dans chacune desdites plaques de ladite chape 121. Préférentiellement, ledit axe 122 est destiné à se placer à l'intérieur d'un crochet d'attelage (ou main d'attelage) faisant saillie du tracteur auquel on souhaite accrocher ledit châssis fixe 1.

Préférentiellement, et comme on peut particulièrement le voir sur la figure 4, ledit châssis fixe 1 comprend également un moyen d'attelage inférieur fixe 13, constituant avantageusement lesdits deux points d'attache inférieures femelles dudit attelage ISO trois points. De manière préférentielle, ledit moyen d'attelage inférieur fixe 13 comprend, de manière symétrique par rapport à un axe vertical fixe (F-F') passant par ledit moyen d'attelage supérieur fixe 12, une chape inférieure fixe 131 avantageusement constituée par deux plaques de métal parallèles entres elles et verticales, comme l'illustre la figure 4. Selon ce mode préférentiel, ledit moyen d'attelage inférieur fixe 13 comprend également un axe inférieur 132 destiné à correspondre avec deux trous opposés réalisés dans lesdites plaques. Préférentiellement, ledit axe 132 est destiné à se placer à l'intérieur d'un crochet d'attelage (ou main d'attelage) faisant saillie du tracteur auquel on souhaite accrocher ledit châssis fixe 1.

Avantageusement, et comme on peut notamment le voir sur la figure 4, ledit châssis fixe 1 comprend un premier support d'accessoire 14 destiné à recevoir un ou plusieurs accessoires, comme par exemple un boitier électrique qui peut être destiné à rassembler les différents éléments nécessaires au fonctionnement dudit porte-outil et / ou dudit outil (tels que des fusibles, des relais, des processeurs, etc.). Préférentiellement, ledit premier support 14 se présente sous la forme d'une tôle avantageusement pliée en cornière de manière à augmenter sa rigidité qui fait saillie latéralement dudit moyen d'attelage supérieur fixe 12. Préférentiellement ledit premier support 14 présente au moins une surface plane sensiblement horizontale de manière à offrir une surface d'appui pour un boitier électrique (non représenté sur les figures) qui peut avantageusement être fixé audit premier support 14 par n'importe quel moyen de fixation (vis, rivets, etc.).

Préférentiellement, ledit châssis fixe 1 comprend également un deuxième support d'accessoire 15 destiné à recevoir un distributeur hydraulique 22 qui peut être destiné à alimenter en énergie hydraulique ledit porte-outil, comme cela sera détaillé par la suite, ou ledit outil, ou destiné à alimenter d'une part ledit moyen de déplacement 2 et d'autre part ledit outil agricole en énergie. Alternativement, ledit deuxième support 15 peut également recevoir n'importe quel autre type de distributeur, comme par exemple un distributeur pneumatique, voire même un autre type de composant (un réservoir par exemple) et ce sans sortir du cadre de l'invention. De manière avantageuse, ledit deuxième support 15 se présente sous la forme d'une tôle avantageusement pliée en cornière afin d'augmenter sa rigidité et dont les dimensions sont relativement proches dudit distributeur 22 (ou autre élément) qu'elle supporte et qui fait saillie latéralement dudit moyen d'attelage supérieur fixe 12, préférentiellement selon une direction opposée audit premier support 14. Préférentiellement, ladite tôle présente une surface plane sensiblement verticale de manière à offrir une surface d'accroche conséquente pour ledit distributeur 22 comme on peut le voir sur la figure 4. Ledit distributeur 22 est alors attaché audit deuxième support par n'importe quel moyen classique (vis, rivet, etc.).

Selon l'invention, ledit dispositif porte-outil comprend également un châssis monté mobile 3 relativement audit châssis fixe 1, constituant par conséquent un châssis mobile 3 par rapport audit châssis fixe 1 et donc audit tracteur. Ledit châssis mobile 3 est alors destiné à être attaché audit outil, ce qui permettra alors de rendre ledit outil mobile par rapport audit châssis fixe 1 et par conséquent audit tracteur 1, notamment pour positionner ledit outil par rapport au(x)dit(s) rang(s) de plantations tels qu'expliqué précédemment.

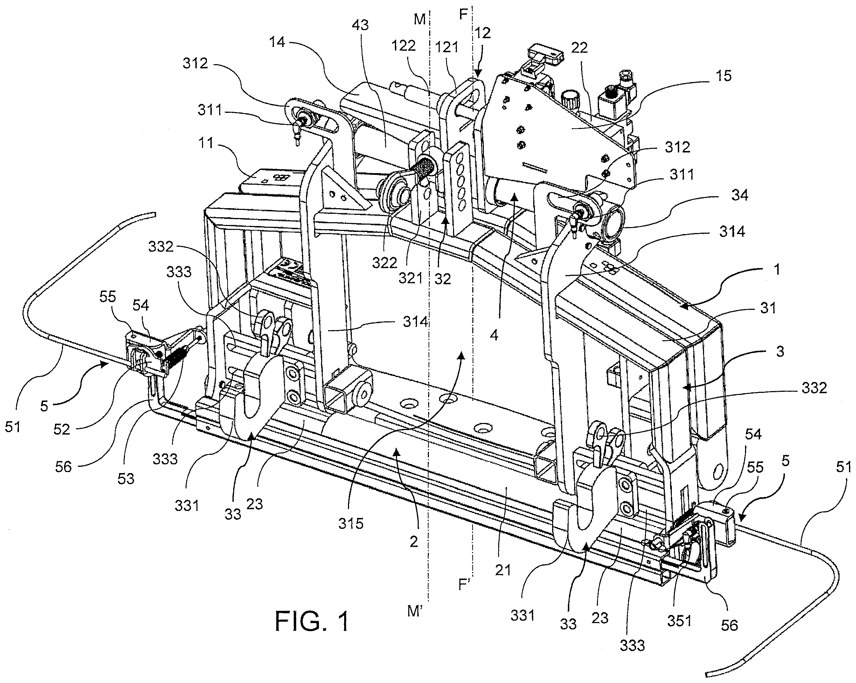

Préférentiellement, ledit châssis mobile 3 est destiné à se déplacer sur une course d'au moins 250 mm, avantageusement d'au moins 300 mm et préférentiellement égale à 350 mm relativement audit châssis fixe 1. En d'autres termes, ledit châssis mobile 3 peut préférentiellement se déplacer de 175 mm de part et d'autre de sa position centrale (ou position neutre) visible à la figure 1 et dans laquelle lesdits châssis fixe et mobile 1, 3 sont sensiblement superposés.

Selon le mode de réalisation préférentiel de l'invention illustré par les différentes figures, et décrit précédemment où ledit dispositif porte-outil est attaché au tracteur par un attelage standard ISO trois points, ledit châssis mobile 3 est avantageusement équipé de ladite partie mâle complémentaire à ladite partie femelle dudit attelage qui équipe ledit outil, de manière à pouvoir recevoir ledit outil, en reproduisant ladite partie mâle qui fait saillie dudit tracteur. Il est ainsi aisé et particulièrement sûr de connecter (ou d'atteler, ou d'attacher) ledit outil audit porte-outil de l'invention, comme on pourrait le faire directement sur n'importe quel tracteur.

Préférentiellement, et comme on peut particulièrement le voir sur la figure 1, ledit châssis mobile 3 comprend un moyen d'attelage supérieur 32, constituant avantageusement ledit troisième point mâle d'attache dudit attelage ISO 3 point. Ainsi, ledit moyen d'attelage supérieur 32 est fixe par rapport au châssis mobile 3 (puisque monté sur ce dernier) mais apparaît mobile par rapport audit châssis fixe 1 et au tracteur. De manière préférentielle, ledit moyen d'attelage supérieur 32 comprend une chape supérieure 321 avantageusement constituée par deux plaques de métal parallèles entres elles et verticales, comme l'illustre la figure 1. Selon ce mode préférentiel, ledit moyen d'attelage supérieur 32 comprend également un tirant 322 destiné à être attaché audit outil.

Préférentiellement, et comme on peut particulièrement le voir sur la figure 1, ledit châssis mobile 3 comprend également un moyen d'attelage inférieur 33, constituant avantageusement lesdits deux points d'attache inférieurs mâles dudit attelage ISO trois points. De manière préférentielle, ledit moyen d'attelage inférieur 33 comprend, de manière symétrique par rapport à un axe vertical mobile (M-M') passant par ledit moyen d'attelage supérieur 32, une main d'attelage inférieure 331 avantageusement constituée par un crochet destiné à supporter et recevoir le poids dudit outil, comme l'illustre la figure 1. De manière connue en tant que telle, ledit moyen d'attelage inférieur 33 est également préférentiellement équipé d'équipements complémentaires, comme par exemple un crochet de sécurité 332 visant à verrouiller ledit moyen d'attelage inférieur, ou encore d'un moyen de réglage 333 (des glissières par exemple) permettant d'ajuster la position de chacune desdites mains d'attelage inférieure 331 par rapport à la position des moyens d'attelage complémentaire dudit outil.

Préférentiellement, comme on peut le voir sur les différentes figures, lesdits châssis fixe 1 et mobile 3 comprennent chacun un cadre, respectivement un cadre fixe 11 et un cadre mobile 31. En d'autres termes, la forme desdits châssis fixe et mobile 1, 3 est telle qu'elle permet de former un cadre de forme polygonale. Par exemple, ledit cadre peut former un rectangle, un carré, un losange, ou avantageusement, selon le mode réalisation préférentiel des figures, un hexagone avec deux angles droits. En d'autres termes, chacun desdits cadre fixe 11 et cadre mobile 31 définit une fenêtre délimitée par les bordures du polygone, c'est-à-dire un espace évidé, ou encore une échancrure.

Naturellement, ledit châssis fixe 1 est conformé pour ménager une fenêtre fixe 115 qui est fixe, tandis que ledit châssis mobile 3 est conformé pour ménager une fenêtre mobile 315 qui est mobile et qui va se déplacer en même temps que ledit châssis mobile 3. En d'autres termes, il existe une position, dite position centrale ou position neutre représentée par la figure 1, dans laquelle lesdits axes verticaux (F-F') et (M-M') sont alignés dans un même plan central et orthogonal auxdits châssis fixe et mobile 1, 3 et une pluralité d'autres positions représentées par les autres figures ou ils ne sont pas superposés.

Ainsi, lesdites fenêtres fixes et mobiles 115, 315 permettent avantageusement de faire passer au travers de ces dernières, et par conséquent au travers dudit châssis fixe 1 et dudit châssis mobile 3, différents éléments comme par exemple des tuyaux, ou même des éléments mobiles comme par exemple des éléments de transmission (chaîne, courroies, cardan, etc.) destinés à alimenter en puissance l'outil connecté au tracteur par l'intermédiaire dudit porte-outil, et ce directement à partir des éléments standards qui équipent généralement les tracteurs (prise de force, centrale hydraulique, etc.).

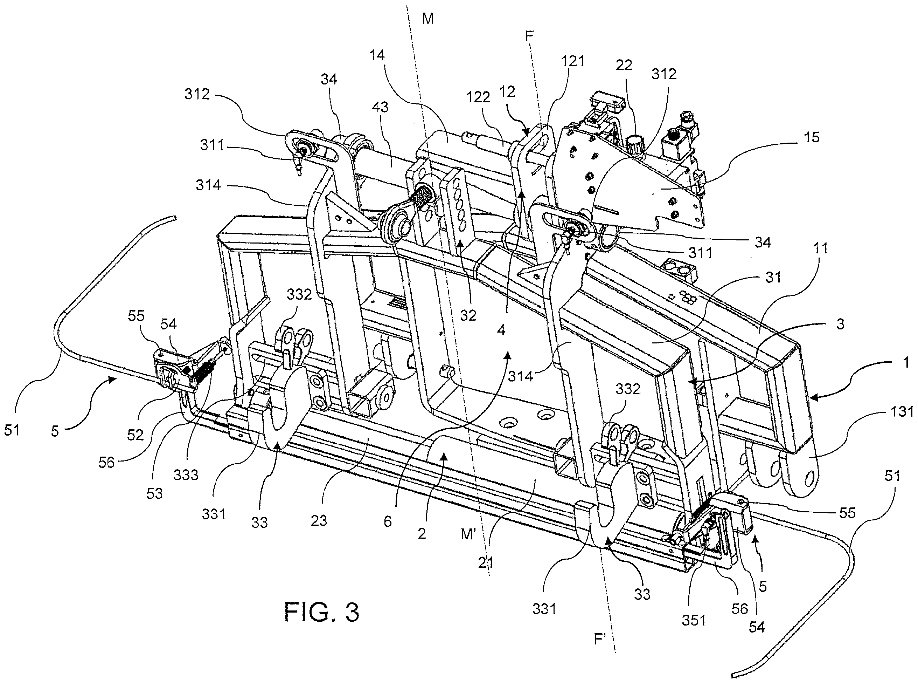

Préférentiellement ladite fenêtre mobile 315 présente une largeur d'au moins 300mm, avantageusement d'au moins 400mm et préférentiellement sensiblement égale à 505mm. Avantageusement cette largeur est définie entre lesdits supports de douille 314 définis précédemment et visibles sur les figures 1 à 7.

Préférentiellement ladite fenêtre fixe 115 présente une hauteur d'au moins 200mm, avantageusement d'au moins 300 mm et préférentiellement sensiblement égale à 436mm. Avantageusement cette hauteur est définie entre les deux portions horizontales de l'hexagone à deux angles droits préférentiellement formé par le cadre fixe 11 visibles sur les figures 1 à 7.

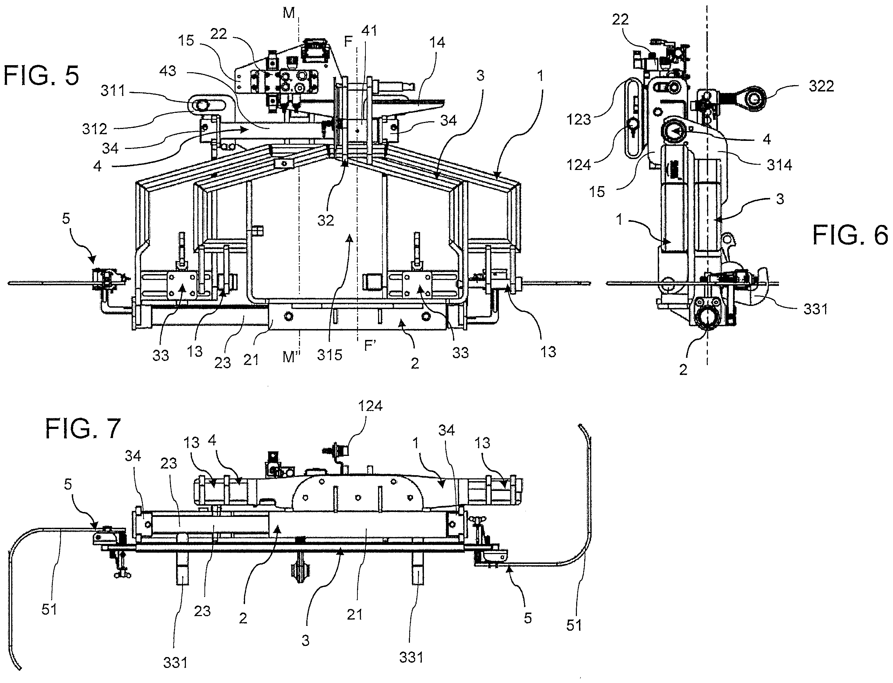

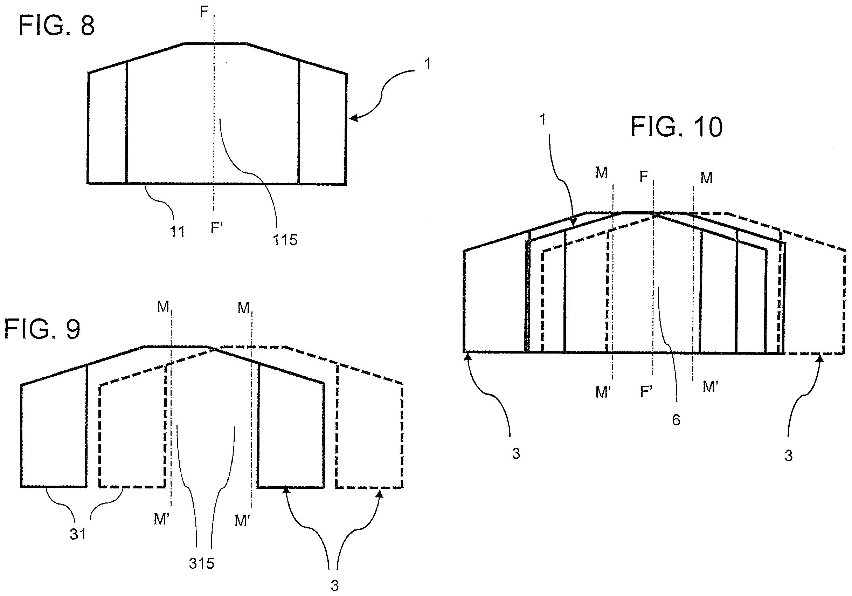

Pour plus de précision quant au déplacement de la fenêtre mobile 315 définie précédemment, on pourra se reporter aux figures 8 à 10 qui illustrent de manière schématique et simplifiée les différentes positions que peut prendre le porte-outil selon le mode de réalisation préférentiel décrit par les figures précédentes, vu depuis le tracteur, dans l'hypothèse où le porte-outi! est attaché à l'arrière du tracteur. Ainsi, la figure 8 illustre schématiquement l'encombrement défini par le cadre 11 du châssis fixe 1 ainsi que la fenêtre 115 formée. La figure 9 illustre schématiquement deux positions extrêmes du cadre 31 du châssis mobile 3, respectivement une position décalée totalement à droite (la position de la figure 5 par exemple) représentée en trait plein et une position totalement décalée à gauche, représentée en pointillé. Deux positions extrêmes correspondantes de la fenêtre mobile 315 sont ainsi définies et représentées sur la figure 9. La figure 10 représente quant à elle la superposition des figures 8 et 9, c'est-à-dire la superposition desdites fenêtres fixe et mobiles 115, 315. Comme le fait apparaître la figure 10, la superposition de la fenêtre fixe 115, de la fenêtre mobile 315 dans sa position extrême à droite et de la fenêtre mobile 315 dans sa position extrême à gauche, définie une fenêtre centrale 6 qui correspond à la zone desdites fenêtres précédentes qui ne subit aucune superposition. En particulier, c'est à travers cette fenêtre centrale 6 que peuvent passer lesdits éléments de transmission précédemment cités dans la mesure où seule la zone définie par ladite fenêtre centrale 6 est fixe et exempt de tout mouvement lors des mouvements dudit châssis mobile 3 par rapport audit châssis fixe 1.

Ainsi, selon l'invention, lesdits châssis fixe et mobile 1, 3 sont conformés pour ménager une fenêtre centrale 6 permettant, quelle que soit la position dudit châssis mobile 3 relativement au châssis fixe 1, le passage d'au moins un organe de transmission qui s'étend depuis le tracteur jusqu'audit outil agricole à travers ledit dispositif pour fournir de la puissance audit outil agricole.

Les dimensions de chacune desdites fenêtres fixe et mobiles 115, 315 sont alors suffisamment importantes pour que le déplacement dudit châssis mobile 3 ne vienne pas interférer avec les éléments se trouvant à l'intérieur de ladite fenêtre centrale 6. En d'autres termes, quelle que soit le déplacement dudit châssis mobile 3 dans les limites permises par sa course et sa trajectoire, les dimensions desdites fenêtres fixe et mobiles 115, 315 sont telles qu'il n'y a aucune interférence entre lesdits châssis fixe et mobiles 1, 3, et tout particulièrement entre lesdits cadres fixes et mobiles 11, 31 et ladite fenêtre centrale 6.

Selon l'invention, ledit dispositif porte-outil comprend un moyen de déplacement 2 connecté (ou attaché) d'une part audit châssis fixe 1 (et préférentiellement à un cadre fixe 11) et d'autre part audit châssis mobile 3 (et préférentiellement à un cadre mobile 31). Par moyen de déplacement, on entend avantageusement un actionneur capable de générer un mouvement de sortie (par exemple une translation ou une rotation) à partir d'une énergie d'entrée (par exemple une énergie électrique, hydraulique ou mécanique). De manière illustrative et non limitative, ledit moyen de déplacement 2 peut comprendre un moteur électrique, une roue, une poulie, des engrenages, etc. Préférentiellement, ledit moyen de déplacement 2 comprend un vérin et avantageusement un vérin hydraulique, c'est-à-dire un vérin capable de transformer une pression hydraulique en un déplacement linéaire sous forme de translation. De manière connue en tant que telle, un vérin est généralement composé d'au moins un corps 21 (ou chambre), à l'intérieur duquel circule un piston (non représenté sur les figures), piston auquel est attachée une tige 23. Dans le cadre d'un vérin double effet, la pression du fluide envoyé d'un côté ou de l'autre du piston permet alors alternativement et respectivement de sortir la tige 23 du vérin et de rentrer cette dernière.

Selon le mode de réalisation préférentiel illustré par les figures 1 à 7, ledit moyen de déplacement 2 comprend un vérin à double tige 23. En d'autres termes, ledit moyen de déplacement 2 comprend deux tiges 23 faisant saillie du corps 21 dudit vérin de manière opposées, tout en étant situées sur un même axe et en étant attachées au même piston. Ainsi, le déplacement du piston du vérin va alors engendrer le mouvement immédiat et simultané des deux tiges 23.

Toujours selon ce mode de réalisation préférentiel, chacune desdites tiges 23 est attachée au châssis mobile 3, et préférentiellement à un angle inférieur du cadre mobile 31 comme on peut le voir sur les figures 1 à 7, tandis que le corps 21 du vérin est lui attaché au châssis fixe 1 et préférentiellement à partie inférieure centrale du cadre
fixe 11. Il en résulte donc un déplacement dudit châssis mobile 3 selon un mouvement de translation. Préférentiellement, lesdits cadres fixe et mobile 11, 31 sont parallèles entre eux et montés sensiblement perpendiculairement à la trajectoire du tracteur, cette dernière étant sensiblement parallèle au(x) rang(s) de plantations. En d'autres termes, le mouvement de translation conféré par ledit vérin est donc suivant un axe sensiblement perpendiculaire audit rang de plantation.

Avantageusement, ledit dispositif porte-outil comprend en outre un moyen de guidage 4 dont la fonction est avantageusement de guider ledit châssis mobile 3 et particulièrement ledit cadre mobile 31 lors du déplacement de ce dernier sous l'effet dudit moyen de déplacement 2, et ce afin de faciliter et de guider le mouvement de ce dernier par rapport audit châssis fixe 1 et particulièrement audit cadre fixe 11. Tout comme le moyen de déplacement 2 décrit précédemment, ledit moyen de guidage 4 est avantageusement connecté ou attaché d'une part audit châssis fixe 1 (et préférentiellement au cadre fixe 11) et d'autre part audit châssis mobile 3 (et préférentiellement au cadre mobile 31).

Préférentiellement et comme on peut le voir sur le mode de réalisation préférentiel illustré par les figures 1 à 7, ledit moyen de guidage 4 comprend un coulisseau 43 destiné à se déplacer (en l'occurrence à coulisser) à l'intérieur d'une bague de guidage 41, de manière à réaliser une liaison pivot glissant. Préférentiellement ladite bague de guidage 41 est solidaire dudit châssis fixe 1, par exemple en étant avantageusement fixée entre lesdites plaques verticales dudit moyen d'attache supérieur fixe 12, comme on peut le voir sur les figures 1 à 7, tandis que ledit coulisseau 43 est lui attaché audit châssis mobile 3, et plus particulièrement audit cadre mobile 31. Par exemple, ledit coulisseau 43 peut comprendre en chacune de ses extrémités une douille 34 fixée audit coulisseau 43 par un moyen classique (une goupille par exemple) de manière à pouvoir être fixé audit cadre mobile 31, préférentiellement par l'intermédiaire d'un support de douille 314 similaire à celui illustré par les figures 1 à 7 et monté fixe par rapport audit cadre mobile 31 et à ladite douille 34. De manière préférentielle, ledit support de douille participe à la rigidité dudit châssis mobile 3 en reliant la partie supérieure dudit cadre mobile 31 et la partie inférieure dudit cadre mobile 31 comme l'illustrent les figures 1 à 7. Avantageusement et de manière symétrique à un axe vertical central mobile (M-M') passant par ledit moyen d'attelage supérieur 32, ledit cadre mobile 31 comporte deux supports de douilles 314 connectés chacun à une douille 34, chacune desdites douilles 34 étant connectée à une extrémité dudit coulisseau 43.

Préférentiellement, ledit moyen de guidage 4 est disposé parallèlement audit vérin à double tige 23 décrit précédemment et centré par rapport à ce dernier, notamment en vue de faciliter le guidage et le déplacement dudit cadre mobile 31 par rapport audit cadre fixe 11 et éviter notamment les phénomènes d'arc-boutement.

Alternativement, il tout à fait envisageable sans sortir du cadre de l'invention, que ledit moyen de guidage 4 soit disposé d'une autre manière par rapport audit vérin, ou éventuellement que ledit moyen de guidage 4 soit intégré audit moyen de déplacement 2 lui-même, voire soit constitué par ce dernier.

Ainsi, selon le mode de réalisation préférentiel décrit ci-dessus et visible sur les figures 1 à 7, ledit dispositif porte outil comprend un moyen de déplacement 2 et un moyen de guidage 4 chacun desdits moyen de déplacement 2 et moyen de guidage 4 étant connectés d'une part audit châssis fixe 1 et d'autre part audit châssis mobile 3 de manière à déplacer ledit châssis mobile 3 selon un mouvement de translation suivant un axe sensiblement perpendiculaire audit rang de plantation.

Dans le cas préférentiel décrit précédemment où ledit châssis fixe 1 comprend un premier support 14 un deuxième support 15, la forme, la disposition de ces derniers ainsi que les accessoires qu'ils supportent (et notamment le distributeur hydraulique 22) offrent alors de manière tout à fait remarquable une protection dudit coulisseau 43 contre les éléments extérieurs qui pourraient éventuellement tomber sur ce dernier et le détériorer ou gêner son coulissement, comme par exemple la pluie, la neige, des feuilles, etc. En effet, en faisant saillie latéralement de part et d'autre dudit moyen d'attelage supérieur fixe 12, lesdits premiers et deuxième support 14, 15 sont situés au-dessus et à l'aplomb dudit coulisseau 43, le protégeant ainsi de certaines agressions extérieures.

Selon l'invention, ledit dispositif porte-outil comprend au moins un moyen de détection 5 dudit rang de plantations, comme on peut le voir sur les figures 1 à 7. En d'autres termes, ledit dispositif porte-outil est capable de détecter de manière autonome, et préférentiellement en temps réel et automatiquement ledit ou lesdits rang(s) de plantations. Selon l'invention, ledit moyen de détection 5 est alors destiné à contrôler automatiquement ledit moyen de déplacement 2 afin de positionner l'outil porté par le porte-outil par rapport à un rang de plantation, ou par rapport à deux rangs de plantations parallèles entre eux, tels que les rangs formés par des vignes ou des arbres fruitiers, et ce indépendamment de la position du tracteur relativement audit rang, comme expliqué précédemment. Plus précisément, ledit moyen de détection 5 va alors contrôler ledit moyen de déplacement 2 en fonction de la détection ou de la non détection du rang de plantation, comme cela sera détaillé par la suite.

Selon un mode préférentiel, ledit moyen de détection 5 est monté sur un angle du cadre 31 dudit châssis mobile 3, et avantageusement sur un angle inférieur, comme on peut le voir sur les figures 1 à 7.

Préférentiellement, ledit dispositif porte-outil comprend deux moyens de détection 5 disposés aux deux angles inférieurs dudit châssis mobile 3, ou plus précisément aux deux angles inférieurs dudit cadre mobile 31 et ce de manière symétrique par rapport audit axe vertical mobile (M-M') passant par ledit moyen d'attache supérieur 32.

Selon l'invention, ledit moyen de détection 5 comprend un palpeur 51 destiné à venir en contact ponctuel avec ledit rang de plantations, comme on peut le voir sur les figures 1 à 7. Avantageusement, ledit palpeur 51 comprend une tige coudée à 90° et dont chacune des longueurs est supérieure à 200 mm et avantageusement supérieure à 250mm. En d'autres termes, ledit palpeur 51 se présente sous la forme d'une tige sensiblement rigide ayant la forme d'un L. Une telle forme et longueur de palpeur 51 permet avantageusement de manière remarquable de pouvoir détecter le rang de plantations plus facilement et plus linéairement, dans la mesure où compte tenu de sa longueur, le palpeur 51 à peu de chance, voire même aucune de chance de tomber entre deux ceps ou entre deux tronc d'arbres. En d'autres termes, grâce à la longueur particulière dudit palpeur 51, la mesure est lissée et le contrôle dudit porte-outil améliorée en évitant ainsi de trop nombreux aller-retours entre deux positions.

Préférentiellement, ledit moyen de détection 5 comprend une tôle de capteur 52 solidaire dudit palpeur 51. En d'autres termes, lorsque ledit palpeur 51 entre en contact avec ladite rangée de plantations, ledit palpeur 51 va se mettre en mouvement, préférentiellement autour d'un pivot 55, selon une trajectoire en arc de cercle (liaison pivot). Par conséquent, ladite tôle de capteur 52 est également mise en rotation autour dudit pivot 55.

Avantageusement, ledit moyen de détection 5 comprend également un capteur de mouvement 351 monté sur un support de palpeur 54 solidaire dudit châssis mobile 3 et destiné à détecter le mouvement du palpeur 51 (et plus particulièrement le mouvement de ladite tôle de capteur 52) lorsque ce dernier est en contact ponctuel avec ladite rangée de plantations. Préférentiellement, ledit moyen de détection 5 comprend également un moyen de rappel automatique 53, comme par exemple un ressort, afin de maintenir et rappeler en position de repos, c'est-à-dire en position selon laquelle ledit palpeur 51 n'est pas en contact avec ladite rangée de plantations, ledit palpeur 51 ainsi que ladite tôle de capteur 52. Avantageusement, ledit moyen de détection 5 comprend en outre un dispositif de réglage du moyen de rappel automatique 531, tel qu'un système vis écrou par exemple permettant de régler la force du rappel automatique, par exemple en fonction de la vitesse de déplacement, de la taille des troncs ou des ceps, de l'usure du mécanisme, etc.

Préférentiellement, ledit capteur de mouvement 351 comprend un capteur inductif capable de détecter la présence ou l'absence de ladite tôle de capteur 52. Avantageusement, ledit capteur de mouvement 351 est un capteur normalement fermé, c'est-à-dire qu'il est conçu pour envoyer un signal lorsque lorsqu'il ne détecte pas ladite tôle de palpeur 52. En effet, si ledit capteur inductif ne détecte pas ladite tôle de capteur 52, cela signifie que cette dernière s'est mise en mouvement suite à une rotation dudit palpeur 51, elle-même liée à un contact entre ledit palpeur 51 et ladite rangée de plantations.

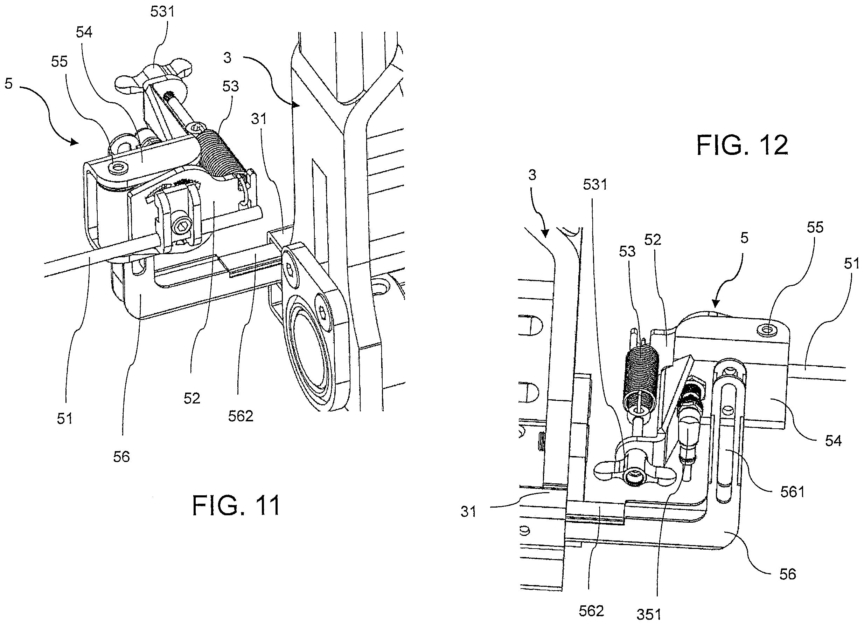

Préférentiellement, ledit moyen de détection 5 est relié audit châssis mobile 3, et plus précisément audit cadre mobile 31 par l'intermédiaire d'un dispositif de réglage du moyen de détection 56, comme on peut le voir en détail sur les figures 11 et 12. Plus précisément, ledit support de palpeur 54 est fixé audit dispositif de réglage qui est lui-même lié au châssis mobile 3, préférentiellement par l'intermédiaire d'une liaison glissière verrouillable.

Avantageusement, ledit dispositif de réglage 56 permet d'assurer le déplacement puis l'immobilisation dudit moyen de détection 5 par rapport audit châssis mobile 3, notamment afin de permettre à l'utilisateur d'effectuer l'étape de positionnement et de centrage nécessaire avant l'utilisation du dispositif porte-outil, comme cela sera détaillé par la suite. En d'autres termes, ledit dispositif de réglage permet, d'éloigner ou au contraire de rapprocher ledit moyen de détection 5 dudit châssis mobile 3, par exemple au moyen d'une crémaillère ou d'une glissière 562, ou de tout autre moyen de déplacement et de fixation. Préférentiellement ladite crémaillère ou glissière 562, comprend des moyens de blocage (non représentés sur les figures) afin d'immobiliser cette dernière dans la position choisie par l'utilisateur.

Dans le cas préférentiel où ledit porte-outil comprend deux moyens de détections 5 disposés symétriquement par rapport à l'axe vertical mobile (M-M') passant par le moyen d'attelage supérieur 32, lesdits deux moyens de détection 5 sont parfaitement identiques et comprennent avantageusement la même architecture, et avantageusement l'architecture décrite ci-dessus. Ainsi, grâce auxdits moyens de détections 5, ainsi qu'à un ensemble de commande particulièrement simple (non représenté sur les figures) mais qui peut avantageusement être intégré dans ledit boitier électrique positionné sur ledit premier support 14, il est possible de contrôler simplement, rapidement et efficacement le positionnement dudit châssis mobile 3, et par conséquent dudit outil qu'il supporte, par rapport au(x) rang(s) de plantations.

Le principe de fonctionnement du positionnement automatique et en temps réel dudit outil, dans le cas d'une utilisation entre deux rangées de plantations, grâce au dispositif porte-outil de l'invention va maintenant être décrit en détail. Dans un premier temps, après avoir attelé ledit porte-outil à l'arrière de son tracteur et l'outil au porte-outil, l'utilisateur, c'est-à-dire le conducteur de tracteur (généralement un vigneron ou un arboriculteur), positionne le tracteur et donc le porte-outil (et par conséquent l'outil qui y est attelé) sensiblement au milieu de l'espace défini entre lesdits rangs de plantations (par exemple entre deux rangées de vigne). Ensuite, l'utilisateur va ajuster la position de chacun des moyens de détection 5 de manière à ce que chacun desdits palpeurs 51 vienne affleurer chacune desdites rangées de plantations, mais sans toutefois les toucher. A cette fin, l'utilisateur utilise lesdits dispositifs de réglage 56 afin d'écarter ou au contraire de rapprocher chacun desdits moyens de détection dudit châssis mobile 3.

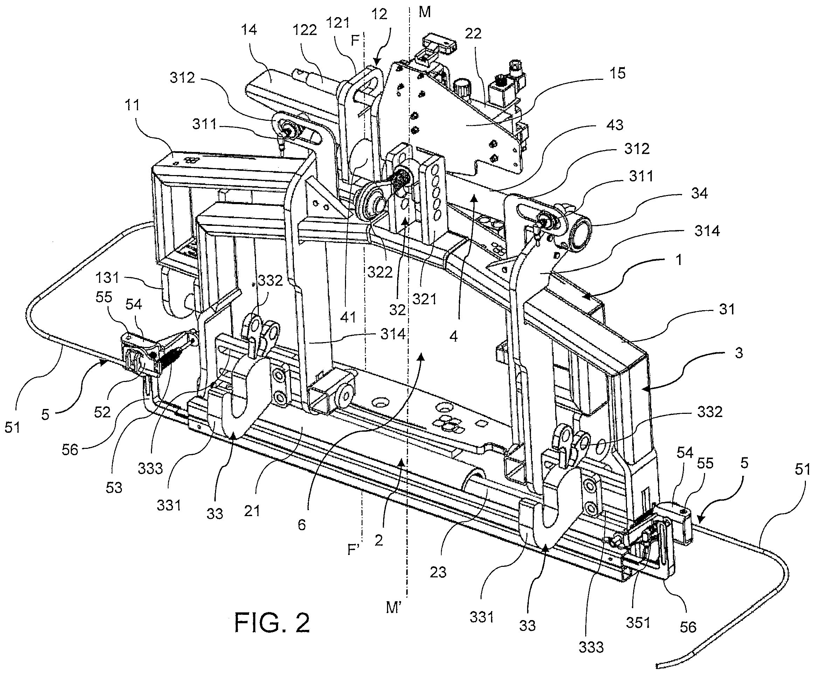

Cette opération permet alors de déterminer la position centrale ou position neutre autour de laquelle ledit châssis mobile 3 va se déplacer. Ensuite, l'utilisateur peut commencer à faire avancer le tracteur et ainsi commencer le travail de la terre ou des plantations qu'il souhaite faire. Au fur et à mesure du déplacement du tracteur et des petits écarts de trajectoire de ce dernier et / ou des défauts de plantation des rangées de plantations, le dispositif porte-outil va alors être amené à se rapprocher d'une des deux rangées de plantations, par exemple de la rangée de gauche. Par conséquent, le palpeur 51 situé à l'angle inférieur gauche dudit cadre mobile 31 va alors entrer en contact avec la rangée de plantations de gauche, ce qui va engendrer !a rotation dudit palpeur 51 autour du pivot 55, ainsi que la rotation de la tôle de palpeur 52 solidaire dudit palpeur 51. Le capteur de mouvement 351 va alors détecter l'absence de ladite tôle 52 et envoyer un signal au dispositif porte-outil signifiant que ce dernier est trop près de la rangée de plantations de gauche. En réponse, ledit dispositif porte-outil va alors actionner ledit moyen de déplacement 2 dans la direction opposée, c'est-à-dire vers la droite, afin de diriger ledit châssis mobile 3 vers sa position extrême décalée à droite, comme on peut par exemple le voir sur les figures 2, 4 et 5. Plus précisément, le distributeur 22 va envoyer de l'huile dans la chambre gauche du vérin afin de déplacer les tiges 23 vers la droite. Le mouvement dudit moyen de déplacement 2 (et par conséquent dudit châssis mobile 3) se poursuit tant que ledit capteur 351 ne détecte pas de nouveau ladite tôle 52, c'est-à-dire tant que ledit palpeur 51 est en contact avec ladite rangée de plantation de gauche. En d'autres termes, dès que le signal dudit capteur 351 cesse, cela signifie que ladite tôle 52 a repris sa position de repos (sous l'effet du moyen de rappel automatique 53) et que par conséquent le palpeur 51 n'est plus en contact avec ladite rangée de plantations. Dès lors, le porte-outil (et donc l'outil) est correctement positionné et il faut arrêter le mouvement dudit moyen de déplacement 2 et dudit châssis mobile 3. Le dispositif porte outil cesse donc d'alimenter en huile ledit moyen de déplacement et le châssis mobile 3 s'immobilise. Naturellement en cas de rapprochement de la rangée de plantations de droite, c'est un fonctionnement parfaitement similaire et symétrique qui est mis en œuvre qu'il n'est par conséquent pas nécessaire de détailler ici.

De manière particulièrement avantageuse, ledit moyen de détection 5 est retournable de 180° de manière à s'adapter au sens de déplacement dudit dispositif par rapport audit rang de plantations. En d'autres termes, cela signifie qu'il est possible de positionner ledit porte-outil à l'arrière du tracteur, tel que cela a été décrit précédemment mais également à l'avant du tracteur. En effet, comme cela a été expliqué précédemment, la forme particulière desdits palpeurs 51 visibles sur les figures 1 à 7 a été particulièrement étudiée pour lisser les mouvements de déplacement dudit châssis mobile 3 en restant en contact le plus longtemps possible avec chacun des pieds ou des ceps de la rangée de plantations. Mais cette forme de L impose un unique sens de déplacement, celui selon lequel c'est l'angle droit du palpeur 51 qui vient en contact en premier avec l'obstacle (le pied ou le cep). En effet, si ce n'est pas le cas, l'extrémité libre de la tige du palpeur 51 risque de pénétrer entre deux pieds ou deux ceps, de se coincer et ainsi de déformer ledit palpeur 51 voire de le casser. Dès lors, la caractéristique remarquable définie ci-dessus selon laquelle il est possible de retourner de 180° autour d'un axe vertical ledit moyen de détection 5 permet de pouvoir utiliser le dispositif porte-outil indifféremment à l'arrière du tracteur (c'est-à-dire en tirant l'outil) ou à l'avant du tracteur (c'est-à-dire en poussant l'outil). La modularité dudit dispositif porte-outil est donc considérablement augmentée. Ainsi, les figures 1 à 7 illustrent chacun desdits moyens de déplacement installé dans une position inversée. Plus précisément sur la figure 1, on peut voir que le moyen de détection 5 de droite est installé de manière à pouvoir monter le dispositif porte-outil à l'arrière du tracteur et est apte à venir en contact avec une rangée de plantations sur la droite, tandis que le moyen de détection 5 est installé en sens inverse (retourné de 180°) de manière à pouvoir monter le dispositif porte-outil à l'avant du tracteur et est apte à venir en contact avec ladite rangée de plantations sur la droite.

Afin de permettre le retournement facile, rapide et sûr dudit moyen de détection 5, ledit dispositif de réglage 56 comprend avantageusement une lumière de fixation 561 débouchante, comme on peut le voir sur la figure 12. Ainsi, grâce à ladite lumière de fixation 561, il est possible, à l'aide de dispositifs de fixation standards (non représentés) comme un dispositif vis / écrou par exemple, de fixer ledit moyen de détection 5 d'un côté ou de l'autre dudit dispositif de réglage 56, et ainsi de pouvoir retourner à 180° ledit moyen de détection 5.

Avantageusement, ledit dispositif porte-outil est destiné à évoluer entre une position de travail et une position de transport respectivement selon lesquelles ledit outil agricole a vocation à travailler et n'a pas vocation à travailler. En d'autres termes, ledit porte-outil comprend une position de travail dans laquelle il est destiné à se situer le long de la rangée de plantations ou entre deux rangées de plantations parallèles. Dans cette position de travail, ledit porte-outil est alors abaissé et situé à une hauteur du sol relativement basse dans laquelle il permet le bon travail de l'outil qu'il supporte. Lorsque le porte-outil est dans cette position de travail il est amené à déplacer de gauche à droite ledit châssis mobile 3 selon le principe détaillé précédemment. Mais ledit porte-outil comprend également une position de transport dans laquelle il n'est pas destiné à se situer le long de la rangée de plantations ou entre deux rangées de plantations parallèles. Au contraire, dans cette position de transport, ledit porte-outil est alors relevé et situé à une hauteur du sol relativement importante dans laquelle il permet à l'outil qu'il supporte de ne pas être en contact avec le sol. Cette position de transport (ou position relevée) permet alors de faciliter le transport, les manoeuvres, l'entretien, etc. de l'outil et du porte-outil, tout en restant attelé au tracteur. Le passage de la position de travail à la position de transport s'effectue préférentiellement par l'intermédiaire de l'attelage du tracteur qui est mobile en hauteur, sur ordre du conducteur.

Préférentiellement, ledit dispositif porte-outil comprend un capteur de relevage 124 destiné à détecter ladite position de transport, notamment afin de pouvoir déclencher différentes actions et / ou alertes liées au changement de position du porte-outil, comme par exemple l'arrêt automatique de l'outil porté par le porte-outil (dans le cas où ledit outil est un outil actif, en mouvement), ou encore le recentrage automatique du porte-outil, comme cela sera détaillé par la suite.

Préférentiellement, ledit capteur de relevage 124 est monté sur un support de capteur de relevage 123 tel que celui visible sur la figure 4. Avantageusement, ledit support de capteur 123 est alors solidaire dudit moyen d'attelage supérieur fixe 12 et préférentiellement de ladite chape supérieure fixe 121. De manière avantageuse, ledit support de capteur 123 comprend une lumière de fixation permettant de régler, à l'aide d'un dispositif de fixation classique (un dispositif vis écrou par exemple) la hauteur dudit capteur de relevage 124, et ce afin de permettre à l'utilisateur d'ajuster au mieux le moment précis où ledit capteur 124 détectera le changement de position du porte-outil, notamment en fonction des caractéristiques techniques de son tracteur et / ou dudit outil porté par le porte-outil.

Avantageusement, ledit capteur de relevage 124 est un capteur inductif capable de détecter à proximité de lui la présence d'un élément métallique et de manière préférentielle la présence du tirant d'attelage du tracteur auquel est connecté ledit moyen d'attelage supérieur fixe 12. En effet, la présence dans le champ de détection dudit capteur 124 de ce tirant d'attelage signifie que le porte-outil est en position de transport (relevée) et non en position de travail (abaissée), comme l'illustre les figures 1 à 7.

Avantageusement, ledit dispositif porte-outil comprend au moins un capteur de déplacement du châssis mobile 311 destiné à détecter le déplacement dudit châssis mobile 3 relativement audit châssis fixe 1, comme on peut le voir notamment sur la figure 4. Préférentiellement, ledit capteur de déplacement du châssis mobile 311 est monté (c'est-à-dire embarqué) sur ledit châssis mobile 3, comme l'illustre par exemple la figure 2. De manière avantageuse, ledit capteur de déplacement 311 est monté sur un support de capteur 312 réalisé en tôle et comportant une lumière de fixation permettant de régler le positionnement dudit capteur 311, par exemple à l'aide d'un dispositif de fixation classique (dispositif vis écrou par exemple), notamment en fonction de la précision recherchée par l'utilisateur. Préférentiellement, ledit support de capteur 312 est fixé audit châssis mobile 3, comme on peut le voir sur la figure 2 par exemple.

Avantageusement, ledit capteur de déplacement 311 est un capteur inductif capable de détecter à proximité de lui la présence d'un élément métallique et notamment la présence d'un élément métallique appartenant avantageusement audit châssis fixe 1. Préférentiellement, ledit capteur de déplacement 311 interagit avec ledit premier ou deuxième support d'accessoire 14, 15, notamment en détectant la présence de ladite tôle dans son champ de détection, comme cela sera détaillé par la suite.

Préférentiellement ledit dispositif porte-outil comprend deux capteurs de déplacement du châssis mobile 311 tels que décrits précédemment et montés symétriquement par rapport audit axe vertical mobile (M-M'). Dans ce cas, et de manière particulièrement avantageuse, chacun desdits capteurs de déplacement du châssis mobile 311 va alors détecter l'un desdits premier ou deuxième support 14, 15 décrits précédemment. En effet, la forme particulière de ces derniers a notamment été étudiée pour interagir avec précision avec lesdits capteurs 311 de manière à se situer dans le champ de détection desdits capteurs uniquement lorsque ledit châssis mobile 3 est dans une position autre que la position centrée (ou position neutre).

Le fonctionnement dudit dispositif porte-outil lors du passage de sa position de travail à sa position de transport va maintenant être détaillé. Lorsque le dispositif porte-outil se trouve dans sa position de travail et que ce dernier se déplace de gauche à droite au fur et à mesure des données fournies par les moyens de détection 5 selon le procédé de fonctionnement décrit précédemment, les mouvements dudit châssis mobile 3 relativement audit châssis fixe 1 sont suivis par lesdits capteurs de déplacement 311.

Plus précisément, lorsque ledit châssis mobile 3 est en position centrée (ou position neutre), celui-ci est sensiblement aligné au châssis fixe 1 comme on peut le voir sur la figure 1. Dans cette position, aucun obstacle ne se situe dans le champ de détection desdits capteurs 311 comme on peut le voir sur la figure 1. En particulier, le capteur 311 de gauche se trouve au-delà dudit premier support 14 et le capteur de droite se trouve face à une découpe pratiquée dans ledit deuxième support 15. En revanche, lorsque le châssis mobile 3 se déplace vers la droite, par exemple pour tendre à prendre la position illustrée par la figure 2, le capteur 311 de droite va se trouver au-delà dudit deuxième support 15 (et par conséquent ne rien détecter) tandis que le capteur 311 de gauche va lui se trouver face audit premier support 14. En d'autres termes, lorsque le châssis
mobile 3 se déplace sur la droite (selon la figure 2), le capteur 311 de gauche trouve dans son champ de détection la tôle du premier support 14. Ledit capteur 311 de gauche va alors envoyer un signal électrique au dispositif porte-outil pour lui signifier que le châssis mobile 3 a quitté sa position neutre et se trouve décalé à droite. Cette position correspond à une position de travail tout à fait normal dudit porte-outil où ce dernier corrige un défaut de trajectoire et / ou un mauvais alignement du tracteur par rapport au(x) rang(s) de plantations, comme cela a été expliqué précédemment.

Imaginons maintenant que le tracteur arrive en fin de rang de plantations et doive effectuer un demi-tour pour se positionner dans la rangée suivante. Le conducteur, une fois sorti de la rangée va alors relever le dispositif porte-outil pour le faire quitter sa position de travail et le faire atteindre sa position de transport afin de pouvoir manoeuvrer facilement et en toute sécurité. Le capteur de relevage 124 va alors détecter la présence dans son champ de détection dudit tirant d'attelage du tracteur et envoyer son signal au dispositif porte-outil. Ce dernier va alors confronter les informations issues desdits capteur de relevage 124 et capteurs de déplacement 311 : En l'occurrence, dans cet exemple, le châssis mobile 3 se trouve décalé à droite tandis que le porte-outil est en position de transport (position relevée). Il s'agit alors d'une configuration qui n'est pas normale, voire qui peut s'avérer dangereuse. En effet, si le châssis mobile 3 reste décalé à droite, ce dernier ne sera pas correctement positionné lors de la prochaine prise de rang (c'est-à-dire lorsque le conducteur positionnera son tracteur au centre de la rangée suivante), mais ce décalage peut également s'avérer dangereux lors des manœuvres et / ou du transport dans la mesure où le châssis mobile 3 n'est pas centré par rapport au tracteur et dépasse donc davantage d'un côté que de l'autre (en l'occurrence à droite) entrainant alors un risque important d'accrocher des éléments (arbres, panneaux, piétons, etc.) situés sur le bas-côté de la route par exemple.

Compte tenu de cette situation, le dispositif porte-outil va alors automatiquement et immédiatement mettre en mouvement ledit moyen de déplacement 2 vers la gauche afin de recentrer ledit châssis mobile 3. En d'autres termes, ledit distributeur 22 va alors envoyer de l'huile dans la chambre droite du piston afin de décaler les tiges 23 vers la gauche. Le mouvement dudit moyen de déplacement 2 est arrêté dès que ledit capteur de déplacement 311 ne détecte plus ledit premier support 14 dans son champ de détection, signifiant ainsi que le châssis mobile 3 a retrouvé sa position centrée (ou neutre). Ainsi, la sécurité et la facilité de manœuvre et / ou de transport sont remarquablement améliorées par lesdits capteurs de relevage et de déplacement 124, 311 dans la mesure où les informations desdits capteur de relevage 124 et capteur de déplacement du châssis mobile 311 permettent de contrôler automatiquement ledit moyen de déplacement 2 de manière à garantir un recentrage automatique dudit châssis mobile 3 relativement audit châssis fixe 1 lors de la position de transport.

Ainsi, selon ce mode de réalisation particulière avantageux, il existe au moins deux éléments qui peuvent déclencher un mouvement dudit châssis mobile 3 : soit les informations fournies par lesdits moyens de détection 5 soit les informations fournies conjointement par lesdits capteurs de relevage et de déplacement 124, 311. Eventuellement, et sans sortir du cadre de l'invention, un troisième mode de déclenchement, qui serait un déplacement manuel ordonné par l'utilisateur est évidemment envisageable.

L'invention concerne également en tant que tel un procédé d'installation d'un outil sur un tracteur équipé d'un dispositif porte-outil permettant le contrôle du positionnement dudit outil relativement à un rang de plantations indépendamment de la position du tracteur relativement audit rang, ledit dispositif comprenant un châssis fixe (1) et un châssis monté mobile (3) relativement audit châssis fixe (1), ledit châssis fixe (1) étant conformé pour ménager une fenêtre fixe (115) qui est fixe, tandis que ledit châssis mobile (3) est conformé pour ménager une fenêtre mobile (315) qui est mobile et qui va se déplacer en même temps que ledit châssis mobile (3), le procédé comprenant les étapes suivantes :
- on attache audit tracteur ledit châssis fixe,
- on attache audit tracteur ledit outil viticole ou arboricole,
ledit procédé comprenant en outre une étape au cours de laquelle on connecte audit tracteur, à travers une fenêtre centrale (6) formée par lesdits châssis fixe et mobile (1, 3), au moins un organe de transmission qui s'étend depuis le tracteur jusqu'audit outil viticole ou arboricole à travers ledit dispositif pour fournir de la puissance audit outil viticole ou arboricole, les dimensions de chacune desdites fenêtres fixe et mobiles (115, 315) étant suffisamment importantes pour que le déplacement dudit châssis mobile (3) ne vienne pas interférer avec les éléments se trouvant à l'intérieur de ladite fenêtre centrale (6), la zone définie par ladite fenêtre centrale (6) étant fixe et exempte de tout mouvement lors des mouvements dudit châssis mobile (3) par rapport audit châssis fixe (1), ledit dispositif porte-outil comprenant un moyen de déplacement (2) connecté ou attaché d'une part audit châssis fixe (1) et d'autre part audit châssis mobile (3), ledit dispositif porte-outil comprenant au moins un moyen de détection (5) dudit rang de plantations destiné à contrôler automatiquement ledit moyen de déplacement (2), ledit moyen de détection (5) comprenant un palpeur (51) destiné à venir en contact ponctuel avec ledit rang de plantations, ledit moyen de détection (5) étant destiné à contrôler automatiquement ledit moyen de déplacement (2) afin de positionner l'outil porté par le porte-outil par rapport à un rang de plantations, ou par rapport à deux rangs de plantations parallèles entre eux, tels que les rangs formés par des vignes ou des arbres fruitiers, et ce indépendamment de la position du tracteur relativement audit rang.

L'invention concerne également en tant que tel un système agricole destiné à effectuer des travaux agricoles le long d'au moins un rang de plantations comprenant :
- un tracteur,
- un outil viticole ou arboricole tel qu'un cultivateur viticole ou un déchaumeur,
- un dispositif interposé entre ledit tracteur et ledit outil viticole ou arboricole, ledit dispositif permettant le contrôle du positionnement dudit outil relativement au rang de plantations indépendamment de la position du tracteur relativement audit rang, ledit dispositif comprenant un châssis fixe (1) attaché au tracteur, et un châssis monté mobile (3) relativement audit châssis fixe (1) et attaché audit outil, ledit châssis fixe (1) étant conformé pour ménager une fenêtre fixe (115) qui est fixe, tandis que ledit châssis mobile (3) est conformé pour ménager une fenêtre mobile (315) qui est mobile et qui va se déplacer en même temps que ledit châssis mobile (3),
ledit système agricole comprenant en outre au moins un organe de transmission pour fournir de la puissance audit outil viticole ou arboricole qui s'étend depuis le tracteur jusqu'audit outil viticole ou arboricole, ledit organe de transmission passant à travers une fenêtre centrale (6) formée par lesdits châssis fixe et mobile (1, 3), quelle que soit la position dudit châssis mobile (3) relativement au châssis fixe (1), les dimensions de chacune desdites fenêtres fixe et mobiles (115, 315) étant suffisamment importantes pour que le déplacement dudit châssis mobile (3) ne vienne pas interférer avec les éléments se trouvant à l'intérieur de ladite fenêtre centrale (6), la zone définie par ladite fenêtre centrale (6) étant fixe et exempte de tout mouvement lors des mouvements dudit châssis mobile (3) par rapport audit châssis fixe (1), ledit dispositif porte-outil comprenant un moyen de déplacement (2) connecté ou attaché d'une part audit châssis fixe (1) et d'autre part audit châssis mobile (3), ledit dispositif porte-outil comprenant au moins un moyen de détection (5) dudit rang de plantations destiné à contrôler automatiquement ledit moyen de déplacement (2), ledit moyen de détection (5) comprenant un palpeur (51) destiné à venir en contact ponctuel avec ledit rang de plantations, ledit moyen de détection (5) étant destiné à contrôler automatiquement ledit moyen de déplacement (2) afin de positionner l'outil porté par le porte-outil par rapport à un rang de plantations, ou par rapport à deux rangs de plantations parallèles entre eux, tels que les rangs formés par des vignes ou des arbres fruitiers, et ce indépendamment de la position du tracteur relativement audit rang.

## Revendications

1. Dispositif porte-outil destiné à être interposé entre un tracteur et un outil viticole ou arboricole, ledit dispositif permettant le contrôle du positionnement dudit outil relativement à un rang de plantations indépendamment de la position du tracteur relativement audit rang, ledit dispositif comprenant un châssis fixe (1) destiné à être attaché au tracteur, et un châssis monté mobile (3) relativement audit châssis fixe (1) et destiné à être attaché audit outil, ledit châssis fixe (1) étant conformé pour ménager une fenêtre fixe (115) qui est fixe, tandis que ledit châssis mobile (3) est conformé pour ménager une fenêtre mobile (315) qui est mobile et qui va se déplacer en même temps que ledit châssis mobile (3), lesdits châssis fixe et mobile (1, 3) étant conformés pour ménager une fenêtre centrale (6) permettant, quelle que soit la position dudit châssis mobile (3) relativement au châssis fixe (1), le passage d'au moins un organe de transmission qui s'étend depuis le tracteur jusqu'audit outil viticole ou arboricole à travers ledit dispositif pour fournir de la puissance audit outil viticole ou arboricole, les dimensions de chacune desdites fenêtres fixe et mobiles (115, 315) étant suffisamment importantes pour que le déplacement dudit châssis mobile (3) ne vienne pas interférer avec les éléments se trouvant à l'intérieur de ladite fenêtre centrale (6), la zone définie par ladite fenêtre centrale (6) étant fixe et exempte de tout mouvement lors des mouvements dudit châssis mobile (3) par rapport audit châssis fixe (1), ledit dispositif porte-outil comprenant un moyen de déplacement (2) connecté ou attaché d'une part audit châssis fixe (1) et d'autre part audit châssis mobile (3), ledit dispositif porte-outil comprenant au moins un moyen de détection (5) dudit rang de plantations destiné à contrôler automatiquement ledit moyen de déplacement (2), ledit moyen de détection (5) comprenant un palpeur (51) destiné à venir en contact ponctuel avec ledit rang de plantations, ledit moyen de détection (5) étant destiné à contrôler automatiquement ledit moyen de déplacement (2) afin de positionner l'outil porté par le porte-outil par rapport à un rang de plantations, ou par rapport à deux rangs de plantations parallèles entre eux, tels que les rangs formés par des vignes ou des arbres fruitiers, et ce indépendamment de la position du tracteur relativement audit rang.

2. Dispositif porte-outil selon l'une des revendications précédentes **caractérisé en ce qu'**il comprend un moyen de guidage (4), chacun desdits moyen de déplacement (2) et moyen de guidage (4) étant connectés d'une part audit châssis fixe (1) et d'autre part audit châssis mobile (3) de manière à déplacer ledit châssis mobile (3) selon un mouvement de translation suivant un axe sensiblement perpendiculaire audit rang de plantation.

3. Dispositif porte-outil selon la revendication précédente **caractérisé en ce que** ledit moyen de déplacement (2) comprend un vérin à double tige (23).

4. Dispositif porte-outil selon la revendication 2 ou 3 **caractérisé en ce que** ledit moyen de guidage (4) comprend un coulisseau (43) destiné à se déplacer à l'intérieur d'une bague de guidage (41).

5. Dispositif porte-outil selon l'une des revendications précédentes **caractérisé en ce que** ledit palpeur (51) comprend une tige coudée à 90° et dont chacune des longueurs est supérieure à 200 mm et avantageusement supérieure à 250mm.

6. Dispositif porte-outil selon l'une des revendications précédentes **caractérisé en ce que** ledit moyen de détection (5) est monté sur un angle d'un cadre (31) dudit châssis mobile (3).

7. Dispositif porte-outil selon l'une des revendications précédentes **caractérisé en ce que** ledit moyen de détection (5) comprend un capteur de mouvement (351) destiné à détecter le mouvement dudit palpeur (51) lorsque ce dernier est en contact ponctue! avec ladite rangée de plantations.

8. Dispositif porte-outil selon l'une des revendications précédentes **caractérisé en ce que** ledit moyen de détection (5) est retournable de 180° de manière à s'adapter au sens de déplacement dudit dispositif par rapport audit rang de plantations.

9. Dispositif porte-outil selon l'une des revendications précédentes **caractérisé en ce qu'**il est destiné à évoluer entre une position de travail et une position de transport respectivement selon lesquelles ledit outil viticole ou arboricole a vocation à travailler et n'a pas vocation à travailler, ledit dispositif porte-outil comprenant un capteur de relevage (124) destiné à détecter ladite position de transport.

10. Dispositif porte-outil selon l'une des revendications précédentes **caractérisé en ce qu'**il comprend au moins un capteur de déplacement du châssis mobile (311) destiné à détecter le déplacement dudit châssis mobile (3) relativement audit châssis fixe (1).

11. Dispositif porte-outil selon les revendications 9 et 10 **caractérisé en ce que** les informations desdits capteur de relevage (124) et capteur de déplacement du châssis mobile (311) permettent de contrôler automatiquement ledit moyen de déplacement (2) de manière à garantir un recentrage automatique dudit châssis mobile (3) relativement audit châssis fixe (1) lors de la position de transport.

12. Procédé d'installation d'un outil sur un tracteur équipé d'un dispositif porte-outil permettant le contrôle du positionnement dudit outil relativement à un rang de plantations indépendamment de la position du tracteur relativement audit rang, ledit dispositif comprenant un châssis fixe (1) et un châssis monté mobile (3) relativement audit châssis fixe (1), ledit châssis fixe (1) étant conformé pour ménager une fenêtre fixe (115) qui est fixe, tandis que ledit châssis mobile (3) est conformé pour ménager une fenêtre mobile (315) qui est mobile et qui va se déplacer en même temps que ledit châssis mobile (3), le procédé comprenant les étapes suivantes :
- on attache audit tracteur ledit châssis fixe,
- on attache audit tracteur ledit outil viticole ou arboricole,
ledit procédé comprenant en outre une étape au cours de laquelle on connecte audit tracteur, à travers une fenêtre centrale (6) formée par lesdits châssis fixe et mobile (1, 3), au moins un organe de transmission qui s'étend depuis le tracteur jusqu'audit outil viticole ou arboricole à travers ledit dispositif pour fournir de la puissance audit outil viticole ou arboricole, les dimensions de chacune desdites fenêtres fixe et mobiles (115, 315) étant suffisamment importantes pour que le déplacement dudit châssis mobile (3) ne vienne pas interférer avec les éléments se trouvant à l'intérieur de ladite fenêtre centrale (6), la zone définie par ladite fenêtre centrale (6) étant fixe et exempte de tout mouvement lors des mouvements dudit châssis mobile (3) par rapport audit châssis fixe (1), ledit dispositif porte-outil comprenant un moyen de déplacement (2) connecté ou attaché d'une part audit châssis fixe (1) et d'autre part audit châssis mobile (3), ledit dispositif porte-outil comprenant au moins un moyen de détection (5) dudit rang de plantations destiné à contrôler automatiquement ledit moyen de déplacement (2), ledit moyen de détection (5) comprenant un palpeur (51) destiné à venir en contact ponctuel avec ledit rang de plantations, ledit moyen de détection (5) étant destiné à contrôler automatiquement ledit moyen de déplacement (2) afin de positionner l'outil porté par le porte-outil par rapport à un rang de plantations, ou par rapport à deux rangs de plantations parallèles entre eux, tels que les rangs formés par des vignes ou des arbres fruitiers, et ce indépendamment de la position du tracteur relativement audit rang.

13. Système agricole destiné à effectuer des travaux agricoles le long d'au moins un rang de plantations comprenant :
- un tracteur,
- un outil viticole ou arboricole tel qu'un cultivateur viticole ou un déchaumeur,
- un dispositif interposé entre ledit tracteur et ledit outil viticole ou arboricole, ledit dispositif permettant le contrôle du positionnement dudit outil relativement au rang de plantations indépendamment de la position du tracteur relativement audit rang, ledit dispositif comprenant un châssis fixe (1) attaché au tracteur, et un châssis monté mobile (3) relativement audit châssis fixe (1) et attaché audit outil, ledit châssis fixe (1) étant conformé pour ménager une fenêtre fixe (115) qui est fixe, tandis que ledit châssis mobile (3) est conformé pour ménager une fenêtre mobile (315) qui est mobile et qui va se déplacer en même temps que ledit châssis mobile (3),
ledit système agricole comprenant en outre au moins un organe de transmission pour fournir de la puissance audit outil viticole ou arboricole qui s'étend depuis le tracteur jusqu'audit outil viticole ou arboricole, ledit organe de transmission passant à travers une fenêtre centrale (6) formée par lesdits châssis fixe et mobile (1, 3), quelle que soit la position dudit châssis mobile (3) relativement au châssis fixe (1), les dimensions de chacune desdites fenêtres fixe et mobiles (115, 315) étant suffisamment importantes pour que le déplacement dudit châssis mobile (3) ne vienne pas interférer avec les éléments se trouvant à l'intérieur de ladite fenêtre centrale (6), la zone définie par ladite fenêtre centrale (6) étant fixe et exempte de tout mouvement lors des mouvements dudit châssis mobile (3) par rapport audit châssis fixe (1), ledit dispositif porte-outil comprenant un moyen de déplacement (2) connecté ou attaché d'une part audit châssis fixe (1) et d'autre part audit châssis mobile (3), ledit dispositif porte-outil comprenant au moins un moyen de détection (5) dudit rang de plantations destiné à contrôler automatiquement ledit moyen de déplacement (2), ledit moyen de détection (5) comprenant un palpeur (51) destiné à venir en contact ponctuel avec ledit rang de plantations, ledit moyen de détection (5) étant destiné à contrôler automatiquement ledit moyen de déplacement (2) afin de positionner l'outil porté par le porte-outil par rapport à un rang de plantations, ou par rapport à deux rangs de plantations parallèles entre eux, tels que les rangs formés par des vignes ou des arbres fruitiers, et ce indépendamment de la position du tracteur relativement audit rang.

## Patentansprüche

1. Werkzeughaltevorrichtung, die dazu bestimmt ist, zwischen einen Schlepper und ein Weinbau- oder Baumzuchtwerkzeug eingefügt zu sein, wobei die Vorrichtung das Steuern der Positionierung des Werkzeugs in Bezug auf eine Pflanzungsreihe unabhängig von der Position des Schleppers in Bezug auf die Reihe erlaubt, wobei die Vorrichtung ein stationäres Chassis (1) umfasst, das dazu bestimmt ist, an dem Schlepper angebracht zu sein, und ein Chassis (3), das beweglich in Bezug auf das stationäre Chassis (1) montiert und dazu bestimmt ist, an dem Werkzeug angebracht zu sein, wobei das stationäre Chassis (1) ausgestaltet ist, um ein stationäres Fenster (115) zu schaffen, das stationär ist, während das bewegliche Chassis (3) ausgestaltet ist, um ein bewegliches Fenster (315) zu schaffen, das beweglich ist und sich gleichzeitig mit dem beweglichen Chassis (3) verlagert, wobei das stationäre und das bewegliche Chassis (1, 3) ausgestaltet sind, um ein zentrales Fenster (6) zu schaffen, das ungeachtet der Position des beweglichen Chassis (3) in Bezug auf das stationäre Chassis (1) das Durchgehen mindestens eines Übertragungselements erlaubt, das sich von dem Schlepper bis zu dem Weinbau- oder Baumzuchtwerkzeug durch die Vorrichtung erstreckt, um dem Weinbau- oder Baumzuchtwerkzeug Leistung zu liefern, wobei die Abmessungen jedes des stationären und des beweglichen Fensters (115, 315) ausreichend groß sind, damit die Verlagerung des beweglichen Chassis (3) die Elemente nicht stört, die sich in dem Inneren des zentralen Fensters (6) befinden, wobei die Zone, die von dem zentralen Fenster (6) definiert wird, stationär und frei von jeder Bewegung bei Bewegungen des beweglichen Chassis (3) in Bezug auf das stationäre Chassis (1) ist, wobei die Werkzeughaltevorrichtung ein Verlagerungsmittel (2) umfasst, das einerseits mit dem stationären Chassis (1) und andererseits mit dem beweglichen Chassis (3) verbunden oder an diesem angebracht ist, wobei die Werkzeughaltevorrichtung mindestens ein Erfassungsmittel (5) der Pflanzungsreihe umfasst, das dazu bestimmt ist, das Verlagerungsmittel (2) automatisch zu steuern, wobei das Erfassungsmittel (5) einen Fühler (51) umfasst, der dazu bestimmt ist, mit der Pflanzungsreihe in Punktkontakt zu kommen, wobei das Erfassungsmittel (5) dazu bestimmt ist, das Verlagerungsmittel (2) automatisch zu steuern, um das Werkzeug, das von dem Werkzeugträger getragen wird, in Bezug auf eine Pflanzungsreihe oder in Bezug auf zwei Pflanzungsreihen, die zueinander parallel sind, wie Reihen, die von Rebstöcken oder Obstbäumen gebildet werden, zu positionieren, und zwar unabhängig von der Position des Schleppers in Bezug auf die Reihe.

2. Werkzeughaltevorrichtung nach einem der vorstehenden Ansprüche, **dadurch gekennzeichnet, dass** sie ein Führungsmittel (4) umfasst, wobei jedes des Verlagerungsmittels (2) und des Führungsmittels (4) einerseits mit dem stationären Chassis (1) und andererseits mit dem beweglichen Chassis (3) derart verbunden ist, dass sie das bewegliche Chassis (3) gemäß einer Translationsbewegung entlang einer Achse, die im Wesentlichen zu der Pflanzungsreihe senkrecht ist, verlagern.

3. Werkzeughaltevorrichtung nach dem vorstehenden Anspruch, **dadurch gekennzeichnet, dass** das Verlagerungsmittel (2) einen Gleichgangzylinder (23) umfasst.

4. Werkzeughaltevorrichtung nach Anspruch 2 oder 3, **dadurch gekennzeichnet, dass** das Führungsmittel (4) einen Stößel (43) umfasst, der dazu bestimmt ist, sich in dem Inneren eines Führungsrings (41) zu verlagern.

5. Werkzeughaltevorrichtung nach einem der vorstehenden Ansprüche, **dadurch gekennzeichnet, dass** der Fühler (51) einen Schaft, der um 90° abgewinkelt ist, umfasst, und von dem jede der Längen größer als 200 mm und vorteilhafterweise größer als 250 mm ist.

6. Werkzeughaltevorrichtung nach einem der vorstehenden Ansprüche, **dadurch gekennzeichnet, dass** das Erfassungsmittel (5) auf einem Winkel eines Rahmens (31) des beweglichen Chassis (3) montiert ist.

7. Werkzeughaltevorrichtung nach einem der vorstehenden Ansprüche, **dadurch gekennzeichnet, dass** das Erfassungsmittel (5) einen Bewegungsfühler (351) umfasst, der dazu bestimmt ist, die Bewegung des Fühlers (51) zu erfassen, wenn dieser Letztere mit der Pflanzungsreihe in Punktkontakt steht.

8. Werkzeughaltevorrichtung nach einem der vorstehenden Ansprüche, **dadurch gekennzeichnet, dass** das Erfassungsmittel (5) um 180° derart wendbar ist, dass es sich an die Verlagerungsrichtung der Vorrichtung in Bezug auf die Pflanzungsreihe anpasst.

9. Werkzeughaltevorrichtung nach einem der vorstehenden Ansprüche, **dadurch gekennzeichnet, dass** sie dazu bestimmt ist, sich zwischen einer Arbeitsposition und einer Transportposition fortzubewegen, je nachdem, ob das Weinbauwerkzeug oder das Baumzuchtwerkzeug dazu vorgesehen ist, zu arbeiten, oder nicht, wobei die Werkzeughaltevorrichtung einen Hubfühler (124) umfasst, der dazu bestimmt ist, die Transportposition zu erfassen.

10. Werkzeughaltevorrichtung nach einem der vorstehenden Ansprüche, **dadurch gekennzeichnet, dass** sie mindestens einen Verlagerungsfühler des beweglichen Chassis (311) umfasst, der dazu bestimmt ist, die Verlagerung des beweglichen Chassis (3) in Bezug auf das stationäre Chassis (1) zu erfassen.

11. Werkzeughaltevorrichtung nach den Ansprüchen 9 und 10, **dadurch gekennzeichnet, dass** die Informationen des Hubfühlers (124) und des Verlagerungsfühlers (311) des beweglichen Chassis es erlauben, das Verlagerungsmittel (2) automatisch derart zu steuern, dass ein automatisches Neuzentrieren des beweglichen Chassis (3) in Bezug auf das stationäre Chassis (1) bei der Transportposition garantiert ist.

12. Verfahren zur Installation eines Werkzeugs auf einem Schlepper, der mit einer Werkzeughaltevorrichtung ausgestattet ist, die das Steuern der Positionierung des Werkzeugs in Bezug auf eine Pflanzungsreihe unabhängig von der Position des Schleppers in Bezug auf die Reihe erlaubt, wobei die Vorrichtung ein stationäres Chassis (1) und ein Chassis (3), das in Bezug auf das stationäre Chassis (1) beweglich montiert ist, umfasst, wobei das stationäre Chassis (1) ausgestaltet ist, um ein stationäres Fenster (115), das stationär ist, zu schaffen, während das bewegliche Chassis (3) ausgestaltet ist, um ein bewegliches Fenster (315) zu schaffen, das beweglich ist und sich gleichzeitig mit dem beweglichen Chassis (3) verlagert, wobei das Verfahren die folgenden Schritte umfasst:
- Anbringen des stationären Chassis an dem Schlepper,
- Anbringen des Weinbau- oder Baumzuchtwerkzeugs an dem Schlepper,
wobei das Verfahren außerdem einen Schritt umfasst, in dessen Verlauf an dem Schlepper durch ein zentrales Fenster (6), das von dem stationären und dem beweglichen Chassis (1, 3) gebildet wird, mindestens ein Übertragungselement verbunden wird, das sich von dem Schlepper bis zu dem Weinbau- oder Baumzuchtwerkzeug durch die Vorrichtung erstreckt, um Leistung zu dem Weinbau- oder Baumzuchtwerkzeug zu liefern, wobei die Abmessungen jedes des stationären und des beweglichen Fensters (115, 315) ausreichend groß sind, damit die Verlagerung des beweglichen Chassis (3) die Elemente nicht stört, die sich in dem Inneren des zentralen Fensters (6) befinden, wobei die Zone, die von dem zentralen Fenster (6) definiert wird, stationär und frei von jeder Bewegung bei Bewegungen des beweglichen Chassis (3) in Bezug auf das stationäre Chassis (1) ist, wobei die Werkzeughaltevorrichtung ein Verlagerungsmittel (2) umfasst, das einerseits mit dem stationären Chassis (1) und andererseits mit dem beweglichen Chassis (3) verbunden oder daran angebracht ist, wobei die Werkzeughaltevorrichtung mindestens ein Erfassungsmittel (5) der Pflanzungsreihe umfasst, das dazu bestimmt ist, das Verlagerungsmittel (2) automatisch zu steuern, wobei das Erfassungsmittel (5) einen Fühler (51) umfasst, der dazu bestimmt ist, mit der Pflanzungsreihe in Punktkontakt zu kommen, wobei das Erfassungsmittel (5) dazu bestimmt ist, das Verlagerungsmittel (2) automatisch zu steuern, um das Werkzeug, das von dem Werkzeugträger getragen wird, in Bezug auf eine Pflanzungsreihe oder in Bezug auf zwei Pflanzungsreihen, die zueinander parallel sind, wie die Reihen, die von Rebstöcken oder Obstbäumen gebildet werden, zu positionieren, und zwar unabhängig von der Position des Schleppers in Bezug auf die Reihe.

13. Landwirtschaftliches System, das dazu bestimmt ist, landwirtschaftliche Arbeiten entlang mindestens einer Pflanzungsreihe auszuführen, das Folgendes umfasst:
- einen Schlepper,
- ein Weinbau- oder Baumzuchtwerkzeug, wie einen Weinbaukultivator oder einen Halmteiler,
- eine Vorrichtung, die zwischen dem Schlepper und dem Weinbau- oder Baumzuchtwerkzeug eingefügt ist, wobei die Vorrichtung das Steuern der Positionierung des Werkzeugs in Bezug auf die Pflanzungsreihe unabhängig von der Position des Schleppers in Bezug auf die Reihe erlaubt, wobei die Vorrichtung ein stationäres Chassis (1) umfasst, das an dem Schlepper angebracht ist, und ein Chassis (3), das in Bezug auf das stationäre Chassis (1) beweglich und an dem Werkzeug befestigt ist, wobei das stationäre Chassis (1) ausgestaltet ist, um ein stationäres Fenster (115), das stationär ist, zu schaffen, während das bewegliche Chassis (3) ausgestaltet ist, um ein bewegliches Fenster (315) zu schaffen, das beweglich ist und sich gleichzeitig mit dem beweglichen Chassis (3) verlagert,
wobei das landwirtschaftliche System außerdem mindestens ein Übertragungselement umfasst, um Leistung zu dem Weinbau- oder Baumzuchtwerkzeug zu liefern, das sich von dem Schlepper bis zu dem Weinbau- oder Baumzuchtwerkzeug erstreckt, wobei das Übertragungselement durch ein zentrales Fenster (6), das von dem stationären und dem beweglichen Chassis (1, 3) gebildet wird, ungeachtet der Position des beweglichen Chassis (3) in Bezug auf das stationäre Chassis (1) durchgeht, wobei die Abmessungen jedes des stationären und des beweglichen Fensters (115, 315) ausreichend groß sind, damit die Verlagerung des beweglichen Chassis (3) die Elemente, die sich in dem Inneren des zentralen Fensters (6) befinden, nicht stört, wobei die Zone, die von dem zentralen Fenster (6) gebildet wird, stationär und frei von jeder Bewegung bei Bewegungen des beweglichen Chassis (3) in Bezug auf das stationäre Chassis (1) ist, wobei die Werkzeughaltevorrichtung ein Verlagerungsmittel (2) umfasst, das einerseits mit dem stationären Chassis (1) und andererseits mit dem beweglichen Chassis (3) verbunden oder daran angebracht ist, wobei die Werkzeughaltevorrichtung mindestens ein Erfassungsmittel (5) der Pflanzungsreihe umfasst, das dazu bestimmt ist, das Verlagerungsmittel (2) automatisch zu steuern, wobei das Erfassungsmittel (5) einen Fühler (51) umfasst, der dazu bestimmt ist, mit der Pflanzungsreihe in Punktkontakt zu kommen, wobei das Erfassungsmittel (5) dazu bestimmt ist, das Verlagerungsmittel (2) automatisch zu steuern, um das Werkzeug, das von dem Werkzeugträger getragen wird, in Bezug auf eine Pflanzungsreihe oder in Bezug auf zwei Pflanzungsreihen, die zueinander parallel sind, die von Rebstöcken oder Obstbäumen gebildet werden, zu positionieren, und zwar unabhängig von der Position des Schleppers in Bezug auf die Reihe.

## Claims

1. Tool-carrier device intended to be interposed between a tractor and a viticulture or arboriculture tool, said device enabling the positioning of said tool to be controlled in relation to a row of plants independently of the position of the tractor in relation to said row, said device comprising a fixed chassis (1) intended to be attached to the tractor, and a chassis (3) mounted so as to be able to move in relation to said fixed chassis (1) and intended to be attached to said tool, said fixed chassis (1) being conformed so as to form a fixed window (115) that is fixed, while said movable chassis (3) is conformed so as to form a movable window (315) that is movable and will move at the same time as said movable chassis (3), said fixed and movable chassis (1, 3) being conformed so as to form a central window (6) allowing, whatever the position of said movable chassis (3) in relation to the fixed chassis (1), the passage of at least one transmission member that extends from the tractor as far as said viticulture or arboriculture tool through said device in order to supply power to said viticulture or arboriculture tool, the dimensions of each of said fixed and movable windows (115, 315) being sufficiently great for the movement of said movable chassis (3) not to interfere with the elements situated inside said central window (6), the zone defined by said central window (6) being fixed and free from any movement during movements of said movable chassis (3) with respect to said fixed chassis (1), said tool-carrier device comprising a movement means (2) connected or attached firstly to said fixed chassis (1) and secondly to said movable chassis (3), said tool-carrier device comprising at least one means (5) for detecting said row of plants intended to automatically control said movement means (2), said detection means (5) comprising a probe (51) intended to come into contact at one point with said row of plants, said detection means (5) being intended to automatically control said movement means (2) in order to position the tool carried by the tool carrier with respect to a row of plants, or with respect to two rows of plants parallel to one another, such as the rows formed by vines or fruit trees, independently of the position of the tractor in relation to said row.

2. Tool-carrier device according to one of the preceding claims, **characterised in that** it comprises a guide means (4), each of said movement means (2) and guide means (4) being connected firstly to said fixed chassis (1) and secondly to said movable chassis (3) so as to move said movable chassis (3) in a translational movement along an axis substantially perpendicular to said row of plants.

3. Tool-carrier device according to the preceding claim, **characterised in that** said movement means (2) comprises a double-rod cylinder (23).

4. Tool-carrier device according to claim 2 or claim 3, **characterised in that** said guide means (4) comprises a slider (43) intended to move inside a guide ring (41).

5. Tool-carrier device according to any of the preceding claims, **characterised in that** said probe (51) comprises a rod angled at 90°, each of the lengths of which is greater than 200 mm and advantageously greater than 250 mm.

6. Tool-carrier device according to any of the preceding claims, **characterised in that** said detection means (5) is mounted on a corner of a frame (31) of said movable chassis (3).

7. Tool-carrier device according to any of the preceding claims, **characterised in that** said detection means (5) comprises a movement sensor (351) intended to detect the movement of said probe (51) when the latter is in contact with said row of plants at one point.

8. Tool-carrier device according to any of the preceding claims, **characterised in that** said detection means (5) can be turned through 180° so as to adapt to the direction of movement of said device with respect to said row of plants.

9. Tool-carrier device according to any of the preceding claims, **characterised in that** it is intended to move between a working position and a transport position respectively in accordance with which said viticulture or arboriculture tool is intended to work and is not intended to work, said tool-carrier device comprising a lifting sensor (124) intended to detect said transport position.

10. Tool-carrier device according to any of the preceding claims, **characterised in that** it comprises at least one sensor for the movement of said movable chassis (311) intended to detect the movement of said movable chassis (3) in relation to said fixed chassis (1).

11. Tool-carrier device according to claims 9 and 10, **characterised in that** the information from said lifting sensor (124) and sensor for the movement of the movable chassis (311) makes it possible to automatically control said movement means (2) so as to guarantee automatic re-centring of said movable chassis (3) in relation to said fixed chassis (1) in the transport position.

12. Method for installing a tool on a tractor equipped with a tool-carrier device allowing control of the positioning of said tool in relation to a row of plants independently of the position of the tractor in relation to said row, said device comprising a fixed chassis (1) and a chassis (3) mounted so as to be able to move in relation to said fixed chassis (1), said fixed chassis (1) being conformed so as to form a fixed window (115) which is fixed, while said movable chassis (3) is conformed so as to form a movable window (315) that is movable and will move at the same time as said movable chassis (3), the method comprising the following steps:
- said fixed chassis is attached to said tractor,
- said viticulture or arboriculture tool is attached to said tractor,
said method further comprising a step during which there is connected, to said tractor, through a central window (6) formed by said fixed and movable chassis (1, 3), at least one transmission member that extends from the tractor as far as said viticulture or arboriculture tool through said device in order to supply power to said viticulture or arboriculture tool, the dimensions of each of said fixed and movable windows (115, 315) being sufficiently great for the movement of said movable chassis (3) not to interfere with the elements situated inside said central window (6), the zone defined by said central window (6) being fixed and free from any movement during movements of said movable chassis (3) with respect to said fixed chassis (1), said tool-carrier device comprising a movement means (2) connected or attached firstly to said fixed chassis (1) and secondly to said movable chassis (3), said tool-carrier device comprising at least one means (5) for detecting said row of plants intended to automatically control said movement means (2), said detection means (5) comprising a probe (51) intended to come into contact at one point with said row of plants, said detection means (5) being intended to automatically control said movement means (2) in order to position the tool carried by the tool carrier with respect to a row of plants, or with respect to two rows of plants parallel to one another, such as the rows formed by vines or fruit trees, independently of the position of the tractor in relation to said row.

13. Agricultural system intended to carry out agricultural work along at least one row of plants, comprising:
- a tractor,
- a viticulture or arboriculture tool such as a viticulture cultivator or a stubble cultivator,
- a device interposed between said tractor and said viticulture or arboriculture tool, said device enabling the position of said tool in relation to the row of plants to be controlled independently of the position of the tractor in relation to said row, said device comprising a fixed chassis (1) attached to the tractor, and a chassis (3) mounted so as to be able to move in relation to said fixed chassis (1) and attached to said tool, said fixed chassis (1) being conformed so as to form a fixed window (115) that is fixed, while said movable chassis (3) is conformed so as to form a movable window (315) that is movable and will move at the same time as said movable chassis (3),
said agricultural system further comprising at least one transmission member for supplying power to said viticulture or arboriculture tool that extends from the tractor as far as said viticulture or arboriculture tool, said transmission member passing through a central window (6) formed by said fixed and movable chassis (1, 3), whatever the position of said movable chassis (3) in relation to the fixed chassis (1), the dimensions of each of said fixed and movable windows (115, 315) being sufficiently great for the movement of said movable chassis (3) not to interfere with the elements situated inside said central window (6), the zone defined by said central window (6) being fixed and free from any movement during movements of said movable chassis (3) with respect to said fixed chassis (1), said tool-carrier device comprising a movement means (2) connected or attached firstly to said fixed chassis (1) and secondly to said movable chassis (3), said tool-carrier device comprising at least one means (5) for detecting said row of plants intended to automatically control said movement means (2), said detection means (5) comprising a probe (51) intended to come into contact at one point with said row of plants, said detection means (5) being intended to automatically control said movement means (2) in order to position the tool carried by the tool carrier with respect to a row of plants, or with respect to two rows of plants parallel to one another, such as the rows formed by vines or fruit trees, independently of the position of the tractor in relation to said row.
